# EUROPEAN PATENT APPLICATION

(11) **EP 4 556 247 A1**
(43) Date of publication of application: **21.05.2025**
(21) Application number: 24212916.1
(22) Date of filing: 14.11.2024
(51) Int. Cl.: B41J 3/407, B29C 64/112, B29C 64/379, B41J 11/00

(54) **THREE-DIMENSIONAL OBJECT PRINTING APPARATUS**

(30) Priority: 16.11.2023 JP 2023194933
(71) Applicant: Seiko Epson Corporation, Tokyo 160-8801 (JP)
(72) Inventor: NAKAJIMA, Yoshinori, Suwa-shi 392-8502 (JP); KUMAGAI, Masaru, Suwa-shi 392-8502 (JP)
(74) Representative: Lewis Silkin LLP

(57) **Abstract**

A three-dimensional object printing apparatus includes: a first head unit including a liquid discharge head that discharges a first liquid; a second head unit including a liquid discharge head that discharges a second liquid; and a robot configured to move the first head unit with respect to a three-dimensional workpiece in a state in which the first head unit is mounted and to move the second head unit with respect to the workpiece in a state in which the second head unit is mounted, in which the first head unit and the second head unit are attachable to and detachable from the robot.

## Description

The present application is based on, and claims priority from JP Application Serial Number 2023-194933, filed November 16, 2023, the disclosure of which is hereby incorporated by reference herein in its entirety.

### BACKGROUND

### 1. Technical Field

The present disclosure relates to a three-dimensional object printing apparatus.

### 2. Related Art

In the related art, a three-dimensional object printing apparatus that performs printing on a surface of a three-dimensional workpiece via an ink jet method using a robot is known. For example, JP-A-2023-065834 discloses a three-dimensional printing apparatus including a head configured to discharge inks in a plurality of colors.

Meanwhile, a liquid discharge head configured to discharge inks in a plurality of colors includes a plurality of nozzles, each of which discharges each of inks in a plurality of colors, and thus there is a concern that the liquid discharge head itself may become larger. Therefore, in the three-dimensional object printing apparatus configured to perform printing using inks in a plurality of colors, it is desired to downsize the liquid discharge head.

### SUMMARY

According to an aspect of the present disclosure, a three-dimensional object printing apparatus includes: a first head unit including a first liquid discharge head that discharges a first liquid; a second head unit including a second liquid discharge head that discharges a second liquid; and a movement mechanism configured to move the first head unit with respect to a three-dimensional workpiece in a state in which the first head unit is mounted and configured to move the second head unit with respect to the workpiece in a state in which the second head unit is mounted, in which the first head unit and the second head unit are attachable to and detachable from the movement mechanism.

### BRIEF DESCRIPTION OF THE DRAWINGS

FIG. 1 is a perspective view showing an outline of a three-dimensional object printing apparatus according to an embodiment of the present disclosure.
FIG. 2 is a block diagram showing an electrical configuration of the three-dimensional object printing apparatus according to the present embodiment.
FIG. 3 is an explanatory diagram for describing a schematic structure of a head unit.
FIG. 4 is an explanatory diagram for describing a configuration of a holding mechanism.
FIG. 5 is an explanatory diagram for describing a head unit according to a first modification example.
FIG. 6 is an explanatory diagram for describing a three-dimensional object printing apparatus according to a third modification example.
FIG. 7 is an explanatory diagram for describing a three-dimensional object printing apparatus according to a fifth modification example.
FIG. 8 is an explanatory diagram for describing a three-dimensional object printing apparatus according to a sixth modification example.
FIG. 9 is an explanatory diagram for describing a three-dimensional object printing apparatus according to a seventh modification example.
FIG. 10 is a block diagram showing an electrical configuration of a three-dimensional object printing apparatus according to an eighth modification example.

### DESCRIPTION OF EMBODIMENTS

Hereinafter, embodiments of the present disclosure will be described with reference to the drawings. Here, in each drawing, the dimensions and scales of each section are appropriately different from the actual ones. Further, since the embodiments described in the following are preferred specific examples of the present disclosure, various technically preferable limitations are attached, but the scope of the present disclosure is not limited to the embodiments unless otherwise stated to specifically limit the present disclosure in the following explanation.

In the following, for convenience of description, an X-axis, a Y-axis, and a Z-axis that intersect with each other are appropriately used. In addition, hereinafter, one direction along the X-axis is an X1 direction, and a direction opposite to the X1 direction is an X2 direction. Similarly, directions opposite to each other along the Y-axis are a Y1 direction and a Y2 direction. Further, directions opposite to each other along the Z-axis are a Z1 direction and a Z2 direction. The X1 direction is an example of a "first direction".

Here, the X-axis, the Y-axis, and the Z-axis correspond to coordinate axes of a world coordinate system set in a space in which a robot 2, which will be described below, is installed. Typically, the Z-axis is a vertical axis, and the Z2 direction corresponds to a downward direction in a vertical direction. A base coordinate system with reference to a position of a base portion 210, which will be described below, of the robot 2 is associated with the world coordinate system via calibration. In the following, for convenience, a case where an operation of the robot 2 is controlled by using the world coordinate system as a robot coordinate system will be exemplified.

The Z-axis may not be the vertical axis. Further, the X-axis, the Y-axis, and the Z-axis are typically orthogonal to each other, but the present disclosure is not limited to this, and the X-axis, the Y-axis, and the Z-axis may not be orthogonal to each other. For example, the X-axis, Y-axis, and Z-axis need only intersect with each other at an angle within a range of 80° or more and 100° or less.

### 1. Embodiment

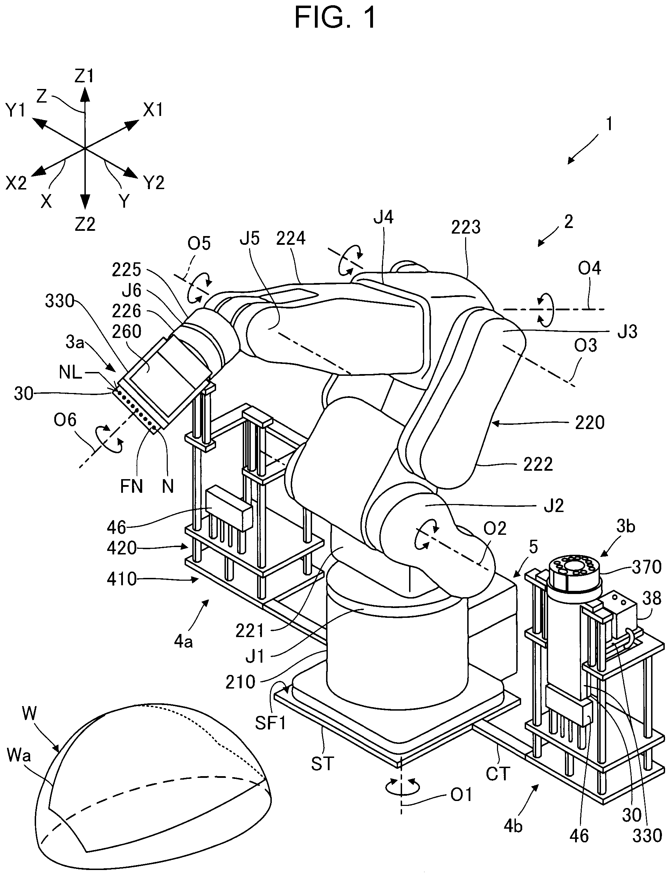

First, an outline of a three-dimensional object printing apparatus 1 according to the present embodiment will be described with reference to FIG. 1.

FIG. 1 is a perspective view showing an outline of a three-dimensional object printing apparatus 1 according to an embodiment of the present disclosure. The three-dimensional object printing apparatus 1 is an apparatus that performs printing on a printing region Wa which is a part or an entirety of a surface of a three-dimensional workpiece W via an ink jet method.

The workpiece W has a surface including the printing region Wa, which is a range in which an image is formed. In an example shown in FIG. 1, the workpiece W is a hemispherical body, and the surface of the workpiece W is a protruding hemispherical surface. The workpiece W is supported by a structure such as a predetermined installation base, a hand of a robot other than the robot 2 described below, or a conveyor. A size, a shape, or an installation posture of the workpiece W is not limited to the example shown in FIG. 1, and is selected in any manner. That is, the three-dimensional workpiece W also includes a planar medium such as printing paper.

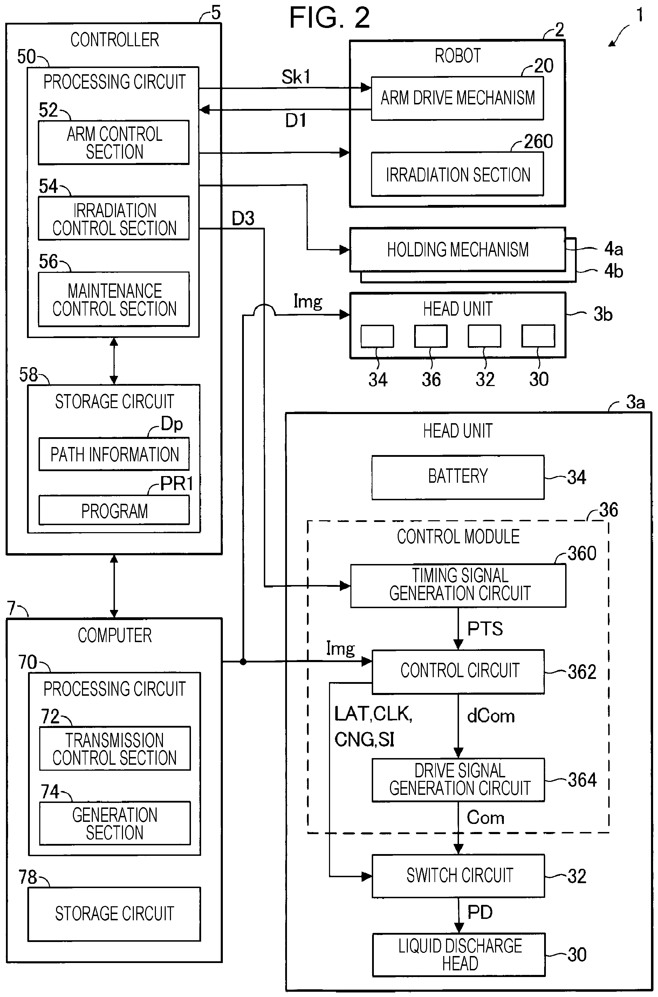

The three-dimensional object printing apparatus 1 shown in FIG. 1 includes the robot 2, head units 3a and 3b, holding mechanisms 4a and 4b used as places for each of the head units 3a and 3b, a controller 5 that controls the operation of the robot 2, a pedestal ST, and a coupling member CT. Further, the three-dimensional object printing apparatus 1 includes a computer 7 described in FIG. 2.

In the example shown in FIG. 1, the head unit 3a is mounted on the robot 2, and the head unit 3b is held by the holding mechanism 4b. It should be noted that, in the following description, the head units 3a and 3b may be collectively referred to as head unit 3, and the holding mechanisms 4a and 4b may be collectively referred to as holding mechanism 4. In addition, in FIG. 1, a case where the number of head units 3 included in the three-dimensional object printing apparatus 1 is two is exemplified, but the number of head units 3 is not limited to two. For example, the three-dimensional object printing apparatus 1 may include three or more head units 3. Similarly, the number of holding mechanisms 4 included in the three-dimensional object printing apparatus 1 is not limited to two and may be three or more. The number of holding mechanisms 4 included in the three-dimensional object printing apparatus 1 is preferably the same as the number of head units 3 provided in the three-dimensional object printing apparatus 1.

In addition, the robot 2 is an example of a "movement mechanism", the head unit 3a is an example of a "first head unit", and the head unit 3b is an example of a "second head unit". In addition, the holding mechanism 4a is an example of a "first holding mechanism", and the holding mechanism 4b is an example of a "second holding mechanism". First, the robot 2 will be described.

The robot 2 changes a position and a posture of the head unit 3 in the world coordinate system. For example, the robot 2 moves the head unit 3 while changing the posture of the head unit 3 with respect to the three-dimensional workpiece W. In the example shown in FIG. 1, the robot 2 is a so-called 6-axis vertical articulated robot.

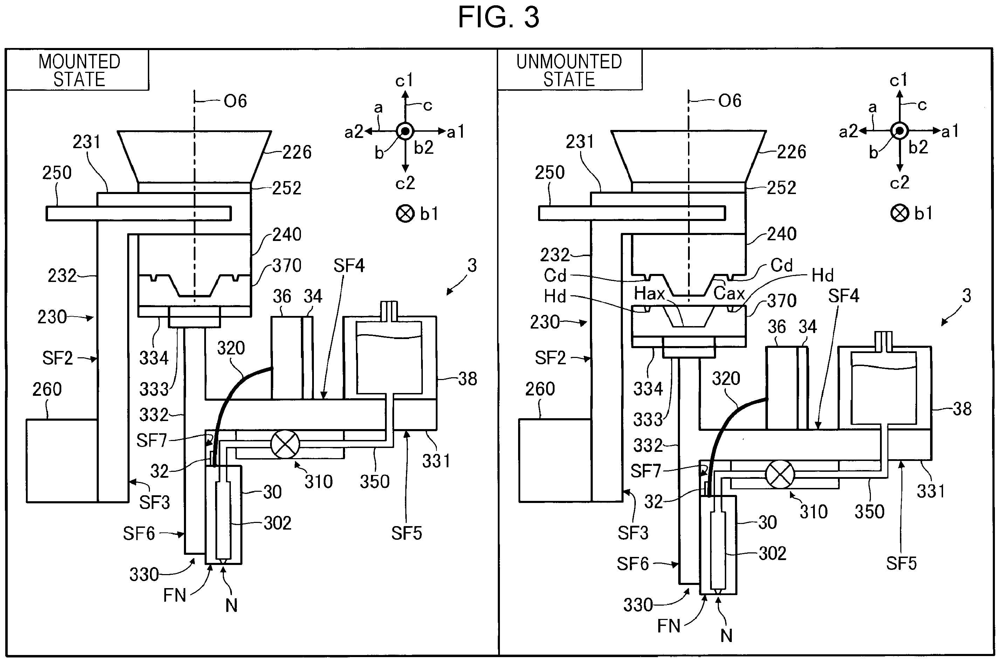

As shown in FIG. 1, the robot 2 includes the base portion 210, an arm 220, an irradiation section 260, and joints J1 to J6. Further, the robot 2 includes an arm drive mechanism 20 described in FIG. 2, and a fixing member 230, a tool changer 240, a heating section 250, and a heat insulator 252 described in FIG. 3. It should be noted that, in the following description, the joints J1 to J6 may be collectively referred to as a joint J.

The base portion 210 is a base that supports the arm 220. In the example shown in FIG. 1, the base portion 210 is fixed to an installation surface SF1 of the pedestal ST by screwing or the like. The installation surface SF1 on which the base portion 210 is fixed is, for example, a surface of the pedestal ST facing the Z1 direction. The installation surface SF1 on which the base portion 210 is fixed is not limited to the installation surface SF1 of the pedestal ST, and may be a floor, a wall, a ceiling, or a surface of a movable truck or the like. That is, the installation surface SF1 on which the base portion 210 is fixed may face any direction.

The arm 220 is coupled to the base portion 210 and changes the position and posture of the head unit 3 with respect to the workpiece W. In the example shown in FIG. 1, the arm 220 is a six-axis robot arm that three-dimensionally changes the position and posture of the head unit 3 with respect to the base portion 210. Specifically, the arm 220 includes arms 221, 222, 223, 224, 225, and 226, which are coupled in this order.

The arm 221 is coupled via the joint J1 to be rotatable around a rotation axis O1 with respect to the base portion 210. The arm 222 is coupled via the joint J2 to be rotatable around a rotation axis O2 with respect to the arm 221. The arm 223 is coupled via the joint J3 to be rotatable around a rotation axis O3 with respect to the arm 222. The arm 224 is coupled via the joint J4 to be rotatable around a rotation axis O4 with respect to the arm 223. The arm 225 is coupled via the joint J5 to be rotatable around a rotation axis O5 with respect to the arm 224. The arm 226 is coupled via the joint J6 to be rotatable around a rotation axis O6 with respect to the arm 225.

Each of the joints J1 to J6 is a mechanism for rotatably coupling one of two adjacent members among the base portion 210 and the arms 221 to 226 to the other.

Although not shown in FIG. 1, each joint J is provided with a drive mechanism that causes one of the two members coupled via the joint J to rotate with respect to the other. A set of the drive mechanisms of the joints J1 to J6 corresponds to an arm drive mechanism 20 shown in FIG. 2, which will be described below.

The rotation axis 01 is an axis perpendicular to the installation surface SF1 on which the base portion 210 is fixed. The rotation axis O2 is an axis perpendicular to the rotation axis 01. The rotation axis O3 is an axis parallel with the rotation axis 02. The rotation axis O4 is an axis perpendicular to the rotation axis 03. The rotation axis O5 is an axis perpendicular to the rotation axis 04. The rotation axis O6 is an axis perpendicular to the rotation axis 05.

Regarding these rotation axes, "perpendicular" includes not only a case where an angle formed by two rotation axes is strictly 90°, but also a case where the angle formed by the two rotation axes deviates within a range of approximately 90° to ±5°. Similarly, "parallel" includes not only a case where two rotation axes are strictly parallel with each other, but also a case where one of the two rotation axes is inclined within a range of approximately ±5° with respect to the other. In addition, orientations of these rotation axes are not limited to the example shown in FIG. 1.

Among the arms 221 to 226 of the robot 2, the arm 226 positioned at a distal end of the robot 2 is equipped with the head unit 3 as an end effector. In the example shown in FIG. 1, the head unit 3a is mounted on the arm 226 by the tool changer 240 shown in FIG. 3, a tool changer 370 described later, and the like.

In addition, an irradiation section 260 that emits energy for curing an ink is attached to the arm 226. An attachment example of the irradiation section 260 is described in FIG. 3. The irradiation section 260 emits energy such as light, heat, electron beams, or X-rays for curing or solidifying an ink on the workpiece W. The irradiation section 260 may appropriately include an optical component such as a lens for adjusting an irradiation direction or an irradiation range of the energy.

Next, an outline of the head unit 3 will be described. Since a configuration of the head unit 3a is the same as a configuration of the head unit 3b, the following description relating to the head unit 3 will apply to both head units 3a and 3b unless otherwise specified. The details of the head unit 3 will be described in FIGS. 2 and 3.

The head unit 3 is an assembly that includes a liquid discharge head 30 that discharges an ink toward the workpiece W. For example, the head unit 3 includes the liquid discharge head 30, an ink tank 38 in which an ink is stored, a support 330 that supports the liquid discharge head 30 and the ink tank 38, and the tool changer 370 that is coupled to the tool changer 240 of the robot 2. Further, the head unit 3 includes a switch circuit 32, a battery 34, and a control module 36, which are described in FIG. 2, and a self-sealing valve 310, a wiring member 320, and a pipe portion 350, which are described in FIG. 3.

The liquid discharge head 30 included in the head unit 3a is an example of a "first liquid discharge head", and the liquid discharge head 30 included in the head unit 3b is an example of a "second liquid discharge head". In addition, an ink discharged from the liquid discharge head 30 included in the head unit 3a is an example of a "first liquid", and an ink discharged from the liquid discharge head 30 included in the head unit 3b is an example of a "second liquid". In addition, the ink tank 38 included in the head unit 3a is an example of a "first ink tank", and the ink tank 38 included in the head unit 3b is an example of a "second ink tank". In FIG. 1, the ink tank 38 included in the head unit 3a is not shown because the ink tank 38 is hidden by the support 330 included in the head unit 3a.

The liquid discharge head 30 includes, for example, a discharge surface FN and a nozzle row NL in which a plurality of nozzles N that open to the discharge surface FN are arranged to extend in a row in a predetermined direction. Although not shown, the liquid discharge head 30 includes a piezoelectric element, which is a drive element, and a cavity that accommodates the ink, for each nozzle N. That is, a piezoelectric element and a cavity are provided corresponding to each nozzle N. Here, the piezoelectric element corresponding to each nozzle discharges an ink from the nozzle N corresponding to the cavity by changing a pressure of the cavity corresponding to the piezoelectric element. As a result, a droplet, which is an ink droplet, lands on the surface of the workpiece W. The liquid discharge head 30 like the above is obtained, for example, by bonding a plurality of substrates such as a silicon substrate processed appropriately by etching or the like with an adhesive or the like. As a drive element for discharging an ink from the nozzle N, a heater that heats an ink in the cavity may be used, instead of the piezoelectric element.

In the example shown in FIG. 1, the liquid discharge head 30 has one nozzle row NL, but the liquid discharge head 30 may have a plurality of nozzle rows NL. It is preferable that, regardless of the number of nozzle rows NL included in the liquid discharge head 30, as an ink discharged from the plurality of nozzles N included in the liquid discharge head 30, the same type of ink is used by the plurality of nozzles N.

The ink is not particularly limited, and examples thereof include an aqueous ink in which a coloring material such as a dye or a pigment is dissolved in an aqueous solvent, a curable ink using a curable resin such as an ultraviolet curable type resin, a solvent-based ink in which a coloring material such as a dye or a pigment is dissolved in an organic solvent, and the like. Among the inks, the curable ink is preferably used. The curable ink is not particularly limited, and may be, for example, any of a thermosetting type, a photocurable type, a radiation curable type, an electron beam curable type, and the like, and a photocurable type such as an ultraviolet curable type is preferable. When the ink has ultraviolet curability, for example, the above-described irradiation section 260 is configured by a light emitting diode (LED) or the like that emits ultraviolet rays.

The ink is not limited to a solution, and may be an ink in which a coloring material or the like is dispersed as a dispersant in a dispersion medium. Further, the ink is not limited to an ink containing a coloring material, and may be, for example, an ink containing conductive particles such as metal particles for forming wiring or the like as a dispersant, a clear ink, or a treatment liquid for surface treatment of the workpiece W.

Here, for example, when the three-dimensional object printing apparatus 1 performs printing using inks in a plurality of colors, inks in different colors are used in the head unit 3a and the head unit 3b. Hereinafter, the ink used in head unit 3a may be referred to as a first color ink, and the ink used in head unit 3b may be referred to as a second color ink. For example, when the first color ink is discharged onto the workpiece W, the robot 2 moves the head unit 3a with respect to the workpiece W in a state in which the head unit 3a is mounted. As a result, printing with the first color ink is executed on the workpiece W. In addition, when the second color ink is discharged onto the workpiece W, the robot 2 disposes the head unit 3a in the holding mechanism 4a and remove the head unit 3a from the arm 226, and mount the head unit 3b held by the holding mechanism 4b on the arm 226. Then, the robot 2 moves the head unit 3b with respect to the workpiece W in a state in which the head unit 3b is mounted. As a result, printing with the second color ink is executed on the workpiece W. As described above, in the present embodiment, printing using inks in a plurality of colors can be executed by replacing the head unit 3 for each color. As a result, in the present embodiment, it is possible to suppress the enlargement of the liquid discharge head 30 itself as compared with a configuration in which one liquid discharge head discharges inks in a plurality of colors. That is, in the present embodiment, the liquid discharge head 30 can be downsized as compared with the configuration in which one liquid discharge head discharges inks in a plurality of colors.

For example, in the configuration in which one liquid discharge head discharges inks in a plurality of colors, the discharge surface FN is larger compared to the present embodiment in which one liquid discharge head 30 discharges an ink in a single color. As a result, it is difficult to execute printing on a curved surface or a recessed portion with high accuracy. Specifically, in printing on a curved surface, when the discharge surface FN is large, a distance between the nozzle N and the curved surface varies greatly depending on a position of the nozzle N on the discharge surface FN compared to a case where the discharge surface FN is small. Therefore, when the discharge surface FN is large, ink discharge accuracy varies depending on the position of the nozzle N on the discharge surface FN as compared to the case where the discharge surface FN is small, making it difficult to execute printing with high accuracy. In addition, when the discharge surface FN is large, it is more difficult to bring the liquid discharge head 30 close to the bottom of the recessed portion compared to the case where the discharge surface FN is small. Therefore, when the discharge surface FN is large, it is difficult to execute printing on the recessed portion with high accuracy compared to the case where the discharge surface FN is small.

Similarly, in a configuration in which a plurality of liquid discharge heads 30 that discharge inks in colors different from each other are provided in one head unit, a region where the discharge surfaces FN of the plurality of liquid discharge heads 30 are positioned is increased, making it difficult to execute printing on a curved surface or a recessed portion with high accuracy.

On the other hand, in the present embodiment, as described above, the liquid discharge head 30 can be downsized, so that it is possible to execute printing on a curved surface or a recessed portion with high accuracy. In addition, in the present embodiment, in the printing in which liquid droplets having different sizes are discharged, a size of a liquid droplet of an ink discharged from the liquid discharge head 30 of the head unit 3a and a size of a liquid droplet of an ink discharged from the liquid discharge head 30 of the head unit 3b may be made different from each other. In this case as well, the liquid discharge head 30 can be more downsized as compared with a configuration in which the printing in which liquid droplets having different sizes are discharged is performed by one liquid discharge head.

It should be noted that, in the present embodiment, a case is assumed in which the robot 2 itself automatically executes replacement of the head unit 3 under control of the controller 5. For example, the controller 5 determines whether the printing on the workpiece W using the ink discharged from the head unit 3a is completed, based on path information Dp shown in FIG. 2 described below, print data Img, and the like. Then, when the printing is completed, the controller 5 replaces the head unit 3 mounted on the robot 2 from the head unit 3a to the head unit 3b. A timing of replacing the head unit 3 may be determined by a user. In this case, for example, the user operates the controller 5 at the timing of replacing the head unit 3 to cause the controller 5 to execute the control for exchanging the head unit 3.

In addition, in the present embodiment, the holding mechanism 4a is disposed at a position in the Y1 direction with respect to the pedestal ST on which the base portion 210 of the robot 2 is placed, and the holding mechanism 4b is disposed at a position in the Y2 direction with respect to the pedestal ST. That is, in the present embodiment, the robot 2 is positioned between the holding mechanism 4a and the holding mechanism 4b, when the robot 2 is viewed in the X1 direction which is a direction parallel to the installation surface SF1 on which the robot 2 is installed and which is a direction facing the robot 2 from a place where the workpiece W is disposed. Therefore, in the present embodiment, it is possible to prevent a movement amount of the robot 2 when the head unit 3 is mounted on the robot 2 from being increased by the head unit 3 mounted on the robot 2.

In addition, in the present embodiment, the holding mechanisms 4a and 4b are coupled to the pedestal ST by the coupling member CT. It is preferable that a material of the coupling member CT is, for example, a rigid material such as a metal material. Since the holding mechanisms 4a and 4b are coupled to the pedestal ST by the coupling members CT, the positions of the holding mechanisms 4a and 4b with respect to the robot 2 are uniquely determined. As a result, in the present embodiment, when the head unit 3 mounted on the robot 2 is replaced, the three-dimensional object printing apparatus 1 can easily specify the position of the holding mechanism 4. As a result, in the present embodiment, the head unit 3 can be easily replaced. The holding mechanisms 4a and 4b may be disposed at any position within a movement range of the arm 226 without being coupled to the pedestal ST. In this case, for example, the position of the holding mechanism 4 with respect to the robot 2 may be set in the controller 5 or the like after the holding mechanism 4 is disposed. The setting of the position of the holding mechanism 4 with respect to the robot 2 may be implemented by instructing an operation of disposing the head unit 3 mounted on the arm 226 in the holding mechanism 4. Alternatively, the controller 5 may specify the position of the holding mechanism 4 with respect to the robot 2 and store the specified position by controlling the operation of the robot 2 such that the head unit 3 mounted on the arm 226 is disposed in the holding mechanism 4 in cooperation with an imaging device such as a camera that images the distal end of the robot 2. Even in a configuration where the holding mechanism 4 is not coupled to the pedestal ST, the position of the holding mechanism 4 with respect to the robot 2 is set in the controller 5 or the like, allowing the position of the holding mechanism 4 to be easily specified when replacing the head unit 3 mounted on the robot 2.

In addition, in the present embodiment, the holding mechanism 4 includes a main body member 410 and a support column 420 for supporting the head unit 3 or the like. In addition, the holding mechanism 4 is provided with a maintenance unit 46 that performs maintenance on the liquid discharge head 30. The maintenance unit 46 may be regarded as a part of the elements included in the holding mechanism 4, or may be regarded as an element separate from the holding mechanism 4. The maintenance unit 46 includes, for example, a cap that covers the liquid discharge head 30 such that the nozzle N is sealed. In addition, the maintenance unit 46 may include a discharge ink receiving portion for receiving an ink discharged by a flushing process of discharging the ink in the liquid discharge head 30. In addition, the maintenance unit 46 may include one or both of a wiper used for a wiping process of wiping off foreign matter such as paper dust adhering to the vicinity of the nozzle N and a tube pump used for a pumping process of sucking ink, air bubbles, or the like from the liquid discharge head 30. The maintenance includes, for example, at least one of protection of the liquid discharge head 30 via the cap, the flushing process, the wiping process, or the pumping process.

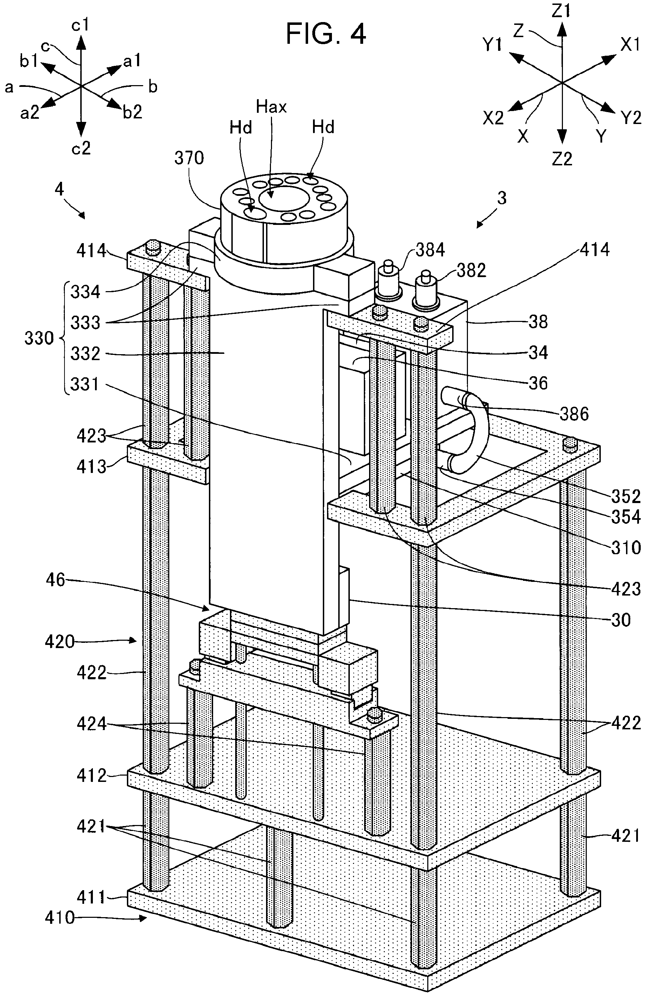

The maintenance unit 46 provided in the holding mechanism 4a and the maintenance unit 46 provided in the holding mechanism 4b are examples of a "maintenance mechanism". For example, the maintenance unit 46 provided in the holding mechanism 4a performs maintenance on the liquid discharge head 30 of the head unit 3a in a state in which the head unit 3a is held by the holding mechanism 4a, that is, in a state in which the head unit 3a is not mounted on the robot 2. Similarly, the maintenance unit 46 provided in the holding mechanism 4b performs maintenance on the liquid discharge head 30 of the head unit 3b in a state in which the head unit 3b is held by the holding mechanism 4b, that is, in a state in which the head unit 3b is not mounted on the robot 2. As a result, in the present embodiment, the maintenance of the liquid discharge head 30 of each head unit 3 can be efficiently executed. The details of the holding mechanism 4 will be described in FIG. 4.

Next, an electrical configuration of the three-dimensional object printing apparatus 1 will be described with reference to FIG. 2, including a detailed description of the controller 5.

FIG. 2 is a block diagram showing the electrical configuration of the three-dimensional object printing apparatus 1 according to the present embodiment. In FIG. 2, among components of the three-dimensional object printing apparatus 1, electrical components are shown. As shown in FIG. 2, the three-dimensional object printing apparatus 1 includes a computer 7 that is communicably connected to the controller 5, in addition to the components shown in FIG. 1.

Each electrical component shown in FIG. 2 may be appropriately divided, a part thereof may be included in another component, or may be integrally formed with the other component. For example, a part or the entirety of functions of the controller 5 may be implemented by the computer 7, or may be implemented by another external apparatus such as a personal computer (PC) connected to the controller 5 via a network such as a local area network (LAN) or the Internet. In addition, the computer 7 may be regarded as an external element of the three-dimensional object printing apparatus 1.

The controller 5 has a function of controlling the operation of the robot 2 and a function of generating a signal D3 for synchronizing an ink discharge operation in the head unit 3 with the operation of the robot 2. For example, the controller 5 includes a processing circuit 50 and a storage circuit 58.

The storage circuit 58 stores various programs executed by the processing circuit 50, various kinds of data processed by the processing circuit 50, and the like. The storage circuit 58 includes, for example, a semiconductor memory of one or both of volatile memories such as a random-access memory (RAM) and non-volatile memories such as a read-only memory (ROM), an electrically erasable programmable read-only memory (EEPROM) or a programmable ROM (PROM). A part or the entirety of the storage circuit 58 may be included in the processing circuit 50.

In the present embodiment, the storage circuit 58 stores a program PR1 and the path information Dp. The program PR1 is, for example, a program that allows the controller 5 to control the operation of the robot 2. The path information Dp is used to control the operation of the robot 2 and indicates the position and posture of the liquid discharge head 30 in the path along which the liquid discharge head 30 is to be moved during the execution of the printing operation. The position and posture of the liquid discharge head 30 are defined, for example, with reference to a tool center point of the robot 2. The tool center point may be, for example, a center of the discharge surface FN which is a distal end surface of the liquid discharge head 30, or a position separated at an interval from the liquid discharge head 30 in an ink discharge direction. The path information Dp is represented by, for example, coordinate values in a coordinate system such as a workpiece coordinate system, a base coordinate system, or the world coordinate system with reference to the position of the workpiece W. For example, the path information Dp is generated by the computer 7 and is input from the computer 7 to the storage circuit 58. When the path information Dp is represented by using coordinate values in the workpiece coordinate system, the path information Dp is used for controlling the operation of the robot 2 after conversion from the coordinate values in the workpiece coordinate system to coordinate values in the base coordinate system or the world coordinate system.

The processing circuit 50 includes, for example, one or more processors such as central processing units (CPUs). The processing circuit 50 may include a programmable logic device such as a field-programmable gate array (FPGA) instead of the CPU or in addition to the CPU. The processing circuit 50 functions as an element that controls the operation of the robot 2 or the like by, for example, executing the program PR1 stored in the storage circuit 58 and operating in accordance with the program PR1. Specifically, the processing circuit 50 functions as an arm control section 52, an irradiation control section 54 that controls the operation of the irradiation section 260, and a maintenance control section 56 that controls the operation of the maintenance unit 46 included in the holding mechanism 4 by operating in accordance with the program PR1. For example, the arm control section 52 controls the operation of the arm drive mechanism 20 of the robot 2 based on the path information Dp and generates the signal D3.

Here, the arm drive mechanism 20 is the set of the drive mechanisms of the joints J1 to J6 described in FIG. 1, and includes, for each joint J, a motor for driving the joint J of the robot 2 and an encoder for measuring a rotation angle of the joint J of the robot 2.

The arm control section 52 performs inverse kinematics calculation, which is a calculation of converting the path information Dp into operation amounts such as the rotation angle and rotation speed of each joint J of the robot 2. In addition, the arm control section 52 acquires, as a signal D1 output from each encoder of the arm drive mechanism 20, a signal based on a measurement result of the rotation angle of the joint J corresponding to the encoder. Then, the arm control section 52 outputs a control signal Sk1 based on the signal D1 output from each encoder such that the operation amount of each joint J, such as the actual rotation angle and rotation speed, matches the result of the inverse kinematics calculation based on the path information Dp. The control signal Sk1 is a signal for controlling an operation of the motor of the arm drive mechanism 20. Here, the control signal Sk1 may be corrected by the arm control section 52 based on the output from a distance sensor (not shown) as necessary.

In addition, the arm control section 52 generates the signal D3 based on the signal D1 output from at least one of the plurality of encoders included in the arm drive mechanism 20. For example, the arm control section 52 generates a trigger signal, including a pulse at a timing when the signal D1 output from one of the plurality of encoders reaches a predetermined value, as the signal D3. The signal D3 is transmitted from the controller 5 to the head unit 3a mounted on the robot 2 among the head units 3a and 3b.

In addition to the liquid discharge head 30 shown in FIG. 1, the head unit 3 includes the switch circuit 32, the control module 36, and the battery 34 that stores power to be supplied to the switch circuit 32 and the control module 36. The elements including a control circuit 362, a drive signal generation circuit 364, and the switch circuit 32 included in the head unit 3a are examples of a "first drive circuit". In addition, the elements including the control circuit 362, the drive signal generation circuit 364, and the switch circuit 32 included in the head unit 3b are examples of a "second drive circuit". In addition, the battery 34 included in the head unit 3a is an example of a "first battery", and the battery 34 included in the head unit 3b is an example of a "second battery".

The control module 36 is a circuit that controls the ink discharge operation in the liquid discharge head 30 based on the signal D3 output from the controller 5 and the print data Img from the computer 7. The print data Img is information indicating an image to be printed on the workpiece W in each path of the plurality of paths indicated by the path information Dp. The control module 36 includes a timing signal generation circuit 360, the control circuit 362, and the drive signal generation circuit 364.

The timing signal generation circuit 360 generates a timing signal PTS based on the signal D3. The timing signal generation circuit 360 is configured by, for example, a timer that starts generation of the timing signal PTS when the signal D3 is detected.

The control circuit 362 generates, for example, a control signal SI, a waveform designation signal dCom, a latch signal LAT, a clock signal CLK, and a change signal CNG. Then, the control circuit 362 outputs the control signal SI, the latch signal LAT, the clock signal CLK, and the change signal CNG to the switch circuit 32 in synchronization with the timing signal PTS, and outputs the waveform designation signal dCom to the drive signal generation circuit 364.

The control signal SI is a digital signal for designating an operation state of each drive element included in the liquid discharge head 30. Specifically, the control signal SI is a signal for designating whether or not to supply a drive signal Com, which will be described below, to each drive element based on the print data lmg. By this designation, for example, whether or not an ink is discharged from the nozzle corresponding to each drive element is specified, or an amount of an ink discharged from the nozzle corresponding to each drive element is specified. The waveform designation signal dCom is a digital signal for defining a waveform of the drive signal Com. The latch signal LAT and the change signal CNG are signals used in combination with the control signal SI to define a drive timing of each drive element to define a timing of discharging an ink from the nozzle corresponding to each drive element. The clock signal CLK is a reference clock signal synchronized with the timing signal PTS.

Here, the control circuit 362 includes, for example, one or more processors such as CPUs. The control circuit 362 may include a programmable logic device such as an FPGA instead of the CPU or in addition to the CPU.

The drive signal generation circuit 364 is a circuit that generates the drive signal Com for driving each drive element included in the liquid discharge head 30. Specifically, the drive signal generation circuit 364 includes, for example, a digital-to-analog converter (DAC) and an amplification circuit. In the drive signal generation circuit 364, the waveform designation signal dCom supplied from the control circuit 362 is converted from a digital signal into an analog signal by the DAC, and the converted analog signal is amplified by the amplification circuit to generate the drive signal Com. Here, a signal having a waveform actually supplied to the drive element among waveforms included in the drive signal Com is a drive pulse PD. The drive pulse PD is supplied from the drive signal generation circuit 364 to the drive element via the switch circuit 32. The drive pulse PD supplied from the switch circuit 32 included in the head unit 3a is an example of a "first drive signal", and the drive pulse PD supplied from the switch circuit 32 included in the head unit 3b is an example of a "second drive signal".

Here, the switch circuit 32 is a circuit including a switching element that switches whether or not to supply at least some of the waveforms included in the drive signal Com as the drive pulse PD based on the control signal SI.

The battery 34 receives power supplied from a commercial power supply (not shown) and stores power to be supplied to the switch circuit 32 and the control module 36. In addition, the battery 34 generates various potentials, such as a power potential, and appropriately supplies the generated potentials to each section of the switch circuit 32 and the control module 36.

The computer 7 has a function of generating the path information Dp, a function of supplying information such as the path information Dp to the controller 5, and a function of supplying information such as the print data Img to the control module 36. For example, the computer 7 includes a processing circuit 70 configured in the same manner as the processing circuit 50 of the controller 5 described above, and a storage circuit 78 configured in the same manner as the storage circuit 58 of the controller 5. The processing circuit 70 functions as a transmission control section 72 and the generation section 74 by operating in accordance with a program (not shown) stored in the storage circuit 78, for example. For example, the generation section 74 generates the path information Dp based on workpiece information indicating the position and shape of the workpiece W, and supplies the generated path information Dp to the controller 5.

In addition, for example, the transmission control section 72 transmits the print data Img to the control circuit 362 of the head unit 3a mounted on the robot 2 and to the control circuit 362 of the head unit 3b held by the holding mechanism 4b. That is, the transmission control section 72 transmits the print data Img to the control module 36 of the head unit 3b even in a state in which the head unit 3b is not mounted on the robot 2. When the head unit 3a is mounted on the robot 2, the control module 36 of the head unit 3b supplies the drive signal Com to the liquid discharge head 30 of the head unit 3b based on the print data Img at a timing based on a detection timing of the signal D3. The transmission control section 72 transmits the print data Img to the control circuit 362 via wired or wireless communication.

As described above, in the present embodiment, the print data Img is transmitted to the control module 36 of the head unit 3b that is not mounted on the robot 2, so that the throughput from the mounting of the head unit 3b on the robot 2 to the supply of the drive signal Com to the liquid discharge head 30 can be improved. In addition, the transmission control section 72 may transmit the print data Img to the control module 36 of each head unit 3 before printing is started. It should be noted that the transmission control section 72 may transmit the print data Img only to the control circuit 362 of the head unit 3a mounted on the robot 2, among the control circuit 362 of the head unit 3a mounted on the robot 2 and the control circuit 362 of the head unit 3b held by the holding mechanism 4b. The transmission control section 72 is an example of a "data transmission section".

The computer 7 is, for example, a PC. In addition, the computer 7 may function as a user interface for the three-dimensional object printing apparatus 1. For example, the computer 7 may have an input device, such as a keyboard or a mouse, that receives operations from the user, or may have a display device, such as a liquid crystal panel, that displays information necessary for the generation of the path information Dp.

As described above, in the present embodiment, the operation of the robot 2 is controlled based on the path information Dp, and the operation of the liquid discharge head 30 of the head unit 3a mounted on the robot 2 is controlled based on the print data Img and the signal D3, whereby the printing operation is performed. For example, in the printing operation, the robot 2 changes the position and posture of the liquid discharge head 30 based on the path information Dp, and the liquid discharge head 30 is caused to discharge an ink toward the workpiece W at an appropriate timing based on the print data Img and the signal D3. Thus, an image based on the print data Img is formed at the workpiece W.

In addition, in the present embodiment, by improving the accuracy of mounting the plurality of head units 3 on the robot 2, the path along which the liquid discharge head 30 is to be moved during the execution of the printing operation can be made substantially the same regardless of whether head unit 3a or 3b is used. Therefore, in the present embodiment, for example, the path information Dp used when moving the head unit 3a mounted on the robot 2 with respect to the workpiece W can be diverted to the path information Dp used when moving the head unit 3b mounted on the robot 2 with respect to the workpiece W. For example, in the present embodiment, the common path information Dp can be used for both the head unit 3a and the head unit 3b. Therefore, in the present embodiment, it is possible to facilitate the preparation for controlling the operation of the robot 2 compared to a case in which the path information Dp is generated from scratch for each head unit 3. In addition, it is easy to adjust the deviation of an ink landing position by using the common path information Dp in the head unit 3a and the head unit 3b. When an ink discharged from the liquid discharge head 30 during the execution of the printing operation deviates from a target landing position and lands on the workpiece W because of the operation of the robot 2, a mechanical tolerance, or the like. By using the common path information Dp in the head unit 3a and the head unit 3b, a trajectory along which the liquid discharge head 30 moves during the execution of the printing operation becomes substantially the same. Therefore, a correction value for correcting the deviation of the landing position generated during the execution of the printing operation using the head unit 3a can be diverted to a case where the printing operation is executed using the head unit 3b. In addition, by measuring the deviation of the landing position generated between the head unit 3a and the head unit 3b, it is possible to generate a correction value considering the operation of the robot 2, the mechanical tolerance, or the like. As a result, it is easy to adjust the deviation of the landing position between the head unit 3a and the head unit 3b.

Next, a schematic structure of the head unit 3 will be described with reference to FIG. 3.

FIG. 3 is an explanatory diagram for describing the schematic structure of the head unit 3. Hereinafter, for convenience of description, an a-axis, a b-axis, and a c-axis intersecting each other will be used as appropriate for description. In addition, in the following, one direction along the a-axis is the a1 direction, and the direction opposite to the a1 direction is the a2 direction. Similarly, directions opposite to each other along the b-axis are a b1 direction and a b2 direction. Further, directions opposite to each other along the c-axis are a c1 direction and a c2 direction.

Here, the a-axis, the b-axis, and the c-axis correspond to coordinate axes of a tool coordinate system set in the head unit 3, and a relationship of a relative position and posture with the world coordinate system or the robot coordinate system are changed by the operation of the robot 2. In an example shown in FIG. 3, when the head unit 3 is mounted on the robot 2, the c-axis is an axis parallel to the rotation axis O6 described in FIG. 1. The a-axis, the b-axis, and the c-axis are typically orthogonal to each other, but the present disclosure is not limited to this, and the a-axis, the b-axis, and the c-axis need only intersect with each other at an angle within a range of 80° or more and 100° or less, for example. The tool coordinate system and the base coordinate system or the robot coordinate system are associated with each other by calibration.

FIG. 3 schematically shows the structure of the head unit 3 when the head unit 3 is viewed in the b2 direction. It should be noted that a "mounted state" in FIG. 3 indicates a state in which the head unit 3 is mounted on the robot 2, and an "unmounted state" in FIG. 3 indicates a state in which the head unit 3 is removed from the robot 2. When the head unit 3 is mounted on the robot 2, protruding portions Cax and Cd of the tool changer 240 of the robot 2 are inserted into recessed portions Hax and Hd of the tool changer 370, respectively. The protruding portion Cax and the recessed portion Hax are used for axis alignment, and the protruding portion Cd and the recessed portion Hd are used to align an orientation of the head unit 3 with respect to the arm 226 in a predetermined direction. By inserting the protruding portions Cax and Cd into the recessed portions Hax and Hd, respectively, the accuracy of mounting the plurality of head units 3 on the robot 2 can be improved.

The tool changer 370 of the head unit 3 may be mounted on the tool changer 240 of the robot 2 via an adapter. That is, the head unit 3 being mounted on the robot 2 also includes the head unit 3 being mounted indirectly on the robot 2.

FIG. 3 describes the structure of the head unit 3, including a description of a mechanism for mounting the head unit 3 on the robot 2. First, the heat insulator 252, the fixing member 230, the tool changer 240, and the like provided in the robot 2 will be described.

The heat insulator 252 is coupled to the arm 226 of the robot 2. The fixing member 230, to which the heating section 250 and the irradiation section 260 are attached, is coupled to the heat insulator 252. The heating section 250 is an example of a "first heating section". The fixing member 230 includes, for example, a first fixing portion 231 into which the heating section 250 is inserted and which is coupled to the heat insulator 252, and a second fixing portion 232 to which the irradiation section 260 is attached. The second fixing portion 232 is provided, for example, to protrude from the end portion of the first fixing portion 231 in a direction away from the arm 226 along the rotation axis O6. In the example shown in FIG. 3, the second fixing portion 232 includes a surface SF2 and a surface SF3 that are perpendicular to the a-axis when the head unit 3 is mounted on the arm 226. The irradiation section 260 is attached to the surface SF2 near an end portion farther from the arm 226 among end portions of the second fixing portion 232 in a direction along the rotation axis O6. The irradiation section 260 may be attached to the surface SF3 of the second fixing portion 232.

The heating section 250 includes, for example, a heater and a thermocouple. For example, a temperature of the heater included in the heating section 250 is controlled by the controller 5 or the like based on a temperature measured by the thermocouple included in the heating section 250. In FIG. 3, the description of the wiring for supplying control signals or the like for controlling the heating section 250 and the irradiation section 260 is omitted. The tool changer 240, which is attachable to and detachable from the tool changer 370 of the head unit 3, is coupled to the first fixing portion 231 of the fixing member 230.

The heat insulator 252 is, for example, a member formed of a material such as a resin material having excellent heat insulating properties. In addition, materials of the fixing member 230 and the tool changer 240 are, for example, rigid materials such as metal materials having good thermal conductivity. That is, thermal conductivity of the heat insulator 252 is smaller than thermal conductivity of the fixing member 230 and thermal conductivity of the tool changer 240. As shown in FIG. 1, in the present embodiment, the heat insulator 252 is positioned between the arm 226 and the first fixing portion 231 of the fixing member 230 in the direction along the rotation axis O6, and the first fixing portion 231 is positioned between the heat insulator 252 and the tool changer 240. Therefore, in the present embodiment, the heat from the heater included in the heating section 250 can be efficiently transferred to the tool changer 240 while transfer of heat from the heater included in the heating section 250 to the arm 226 is reduced. The thermal conductivity of the second fixing portion 232 of the fixing member 230 may be smaller than thermal conductivity of the first fixing portion 231.

In addition, in the present embodiment, since the irradiation section 260 is fixed to the arm 226 via the fixing member 230, when the arm 226 rotates about the rotation axis O6 with respect to the arm 225, the irradiation section 260 also rotates together with the arm 226.

In addition, in the present embodiment, since the heating section 250 and the irradiation section 260 are provided in the robot 2, even when the head unit 3 is replaced, it is not necessary to detach the wiring for supplying control signals or the like for controlling the heating section 250 and the irradiation section 260 from the heating section 250 and the irradiation section 260. For example, since the irradiation section 260 has a high output, when the wiring for supplying power is detached, there is a concern that a configuration of the detachment portion of the wiring becomes complicated. In the present embodiment, since it is not necessary to detach the wiring electrically coupled to the irradiation section 260, it is possible to reduce the complication of the configuration around the irradiation section 260. Similarly, in the present embodiment, it is possible to reduce the complication of the configuration around the heating section 250. When focusing on temperature measurement accuracy of the thermocouple included in the heating section 250, it is preferable that the heating section 250 is provided in the robot 2 rather than being provided in the head unit 3. For example, in a configuration in which the heating section 250 is provided in the head unit 3, there is no portion for detaching the wiring electrically coupled to the heating section 250, thereby reducing the deterioration of the signal from the thermocouple included in the heating section 250.

Next, the head unit 3 will be described.

The head unit 3 includes the liquid discharge head 30, the switch circuit 32, the battery 34, the control module 36, the ink tank 38, the self-sealing valve 310, the wiring member 320, the support 330, the pipe portion 350, and the tool changer 370. The liquid discharge head 30, the switch circuit 32, the battery 34, the control module 36, the ink tank 38, and the self-sealing valve 310 are attached to the support 330.

For example, the support 330 includes a first support portion 331 including a surface SF4 facing the c1 direction and a surface SF5 facing the c2 direction, a second support portion 332 including a surface SF6 facing the a2 direction and a surface SF7 facing the a1 direction, a third support portion 333, and a fourth support portion 334. The first support portion 331 is provided to protrude in the a1 direction from the second support portion 332. The battery 34, the control module 36, and the ink tank 38 are attached to the surface SF4 of the first support portion 331, and the self-sealing valve 310 is attached to the surface SF5 of the first support portion 331. In addition, the liquid discharge head 30 is attached to the surface SF7 near an end portion of the second support portion 332 in the c2 direction. In addition, the second support portion 332 is coupled to the tool changer 370 via the third support portion 333 and the fourth support portion 334. For example, the fourth support portion 334 is coupled to the tool changer 370, the third support portion 333 is coupled to the fourth support portion 334, and the second support portion 332 is coupled to the third support portion 333. While the details will be described in FIG. 4, in the present embodiment, the head unit 3 is supported by the holding mechanism 4 by supporting the first support portion 331 and the third support portion 333 with the holding mechanism 4.

Materials of the support 330 and the tool changer 370 is, for example, a rigid material such as a metal material having good thermal conductivity. That is, thermal conductivity of the support 330 and thermal conductivity of the tool changer 370 are greater than the thermal conductivity of the heat insulator 252. As a result, in the present embodiment, the heat from the heater included in the heating section 250 can be efficiently transmitted to the liquid discharge head 30 and the ink tank 38 via the tool changer 240, the tool changer 370, and the support 330. As a result, in the present embodiment, an ink in the liquid discharge head 30 and an ink in the ink tank 38, which are included in the head unit 3 mounted on the robot 2, can be heated.

The liquid discharge head 30 is supplied with an ink from the ink tank 38 via the pipe portion 350. For example, the liquid discharge head 30 includes a reservoir 302 that stores an ink supplied from the ink tank 38. A capacity of an ink that is storable in the ink tank 38 is larger than a capacity of an ink that is storable in the reservoir 302.

In addition, the self-sealing valve 310 is provided in the pipe portion 350 that couples the liquid discharge head 30 and the ink tank 38. The self-sealing valve 310 is a valve mechanism that opens and closes according to a pressure of an ink in the reservoir 302 of the liquid discharge head 30. For example, even when the posture of the head unit 3 changes, a negative pressure of an ink in the reservoir 302 of the liquid discharge head 30 is maintained within a predetermined range by the opening and closing of the self-sealing valve 310. As described above, the self-sealing valve 310 adjusts a pressure applied to an ink supplied from the ink tank 38 to the liquid discharge head 30.

In addition, in the present embodiment, as shown in FIG. 3, the self-sealing valve 310 is attached to the surface SF5 of the first support portion 331 such that a longitudinal direction of the self-sealing valve 310 is parallel to the direction along the a-axis. In this case, the head unit 3 can be downsized as compared with a configuration in which the self-sealing valve 310 is attached to the support 330 such that the longitudinal direction of the self-sealing valve 310 is parallel to a direction along the c-axis. The self-sealing valve 310 included in the head unit 3a is an example of a "first pressure adjustment section", and the self-sealing valve 310 provided in the head unit 3b is an example of a "second pressure adjustment section".

The pressure adjustment section that adjusts a pressure applied to an ink supplied from the ink tank 38 to the liquid discharge head 30 is not limited to the self-sealing valve 310. For example, the head unit 3 may have a mechanism including an air pressurization mechanism that pressurizes the ink tank 38 and the self-sealing valve 310 as the pressure adjustment section. Alternatively, the head unit 3 may have a back pressure adjustment mechanism other than the air pressurization mechanism and the self-sealing valve 310 as the pressure adjustment section. Alternatively, a back pressure of an ink in the ink tank 38 may be maintained as a negative pressure by placing a sponge or the like in the ink tank 38.

The switch circuit 32 is coupled to the battery 34 and the control module 36 via the wiring member 320. For example, one end of the wiring member 320 is coupled to the battery 34 and the control module 36, and another end of the wiring member 320 is coupled to the liquid discharge head 30 and the switch circuit 32. The wiring member 320 is, for example, a flexible flat cable. The wiring member 320 is not limited to a flexible flat cable. For example, the wiring member 320 may be a flexible wiring board.

Here, in the present embodiment, when the three-dimensional object printing apparatus 1 performs printing on the workpiece W, the operation of the robot 2 is controlled such that a moving direction of the liquid discharge head 30 is the a1 direction. Therefore, the a1 direction corresponds to the front in the moving direction of the liquid discharge head 30, and the a2 direction corresponds to the rear in the moving direction of the liquid discharge head 30. As shown in FIG. 3, the irradiation section 260 is fixed to the arm 226 via the fixing member 230 such that the irradiation section 260 is positioned in the a2 direction with respect to the liquid discharge head 30 of the head unit 3 mounted on the robot 2. That is, the irradiation section 260 is positioned in the rear with respect to the liquid discharge head 30 in the moving direction of the liquid discharge head 30. Therefore, in the present embodiment, the irradiation section 260 can irradiate an ink with energy immediately after the ink lands on the workpiece W from the liquid discharge head 30.

In addition, in the present embodiment, the ink tank 38 is positioned in the front with respect to the liquid discharge head 30 in the moving direction of the liquid discharge head 30. As a result, in the present embodiment, the irradiation section 260 can be easily disposed in the rear with respect to the liquid discharge head 30 in the moving direction of the liquid discharge head 30.

In addition, in the present embodiment, since the head unit 3 includes the ink tank 38, it is possible to reduce the complication of the arrangement of the pipe portion 350 for supplying an ink to the liquid discharge head 30. For example, in a configuration where the head unit 3 does not include the ink tank 38, it is necessary to dispose a tube or the like for transporting an ink from an outside of the head unit 3 to the liquid discharge head 30. Since the head unit 3 moves relative to the workpiece W, in a configuration where the head unit 3 includes the tube for transporting an ink from the outside of the head unit 3 to the liquid discharge head 30, an attachment method and an installation place of the tube become issues. In addition, there is a concern that an operation range of the robot 2 may be restricted by the tube for transporting an ink from the outside of the head unit 3 to the liquid discharge head 30. In the present embodiment, since the tube for transporting an ink from the outside of the head unit 3 to the liquid discharge head 30 is not necessary, the configuration of the three-dimensional object printing apparatus 1 can be simplified, and the operation range of the robot 2 can be prevented from being restricted.

In addition, in the present embodiment, one-directional printing, in which printing is performed in only one direction of either a forward path or a return path along a predetermined direction when the workpiece W is viewed in the Z1 direction, is executed. In addition, reciprocating printing in which printing is performed on both the forward path and the return path along the predetermined direction may be executed. In the reciprocating printing, the arm 226 may be rotated by 180 degrees such that the irradiation section 260 is positioned in the rear with respect to the liquid discharge head 30 in the moving direction of the liquid discharge head 30 when switching from printing on the forward path to printing on the return path or vice versa. In this case, in the reciprocating printing, it is desirable that the wiring for supplying the control signal for controlling the heating section 250 and the irradiation section 260 is disposed such that the arm 226 can be rotated by 180 degrees. In addition, in the reciprocating printing, the arm 226 need not be rotated by 180 degrees when switching from printing on the forward path to printing on the return path, or vice versa. A printing region in the printing on the forward path may overlap with a printing region in the printing on the return path, or the printing region in the printing on the forward path may be included in an irradiation region to be irradiated with energy from the irradiation section 260 during the printing on the return path. In this case, by causing the irradiation section 260 to perform the irradiation without rotating the arm 226 by 180 degrees during the printing on the return path, energy can be emitted to an ink that lands on the workpiece W in the printing on the forward path.

Next, a configuration of the holding mechanism 4 will be described with reference to FIG. 4, including a description of the part of the head unit 3 that is not described in FIG. 3.

FIG. 4 is an explanatory diagram for describing the configuration of the holding mechanism 4. In FIG. 4, the description of the wiring member 320 shown in FIG. 3 is omitted. First, a part of the head unit 3 that is not described in FIG. 3 will be described.

In the tool changer 370 of the head unit 3, when the tool changer 370 is viewed in the Z1 direction, a recessed portion Hax is provided at the center, and a plurality of recessed portions Hd are provided around the recessed portion Hax.

The ink tank 38 includes, for example, a supply port 382 for supplying an ink to the ink tank 38, an adjustment port 384 for taking in air for adjusting the pressure inside the ink tank 38, and a discharge port 386 for discharging an ink from the ink tank 38. In addition, the pipe portion 350 described in FIG. 3 includes a tube 352 and a coupling portion 354 that communicates with the self-sealing valve 310. For example, the tube 352 couples the discharge port 386 and the coupling portion 354. As a result, the ink tank 38 is coupled to the self-sealing valve 310.

In a state in which an ink is not supplied to the ink tank 38, the supply port 382 may be covered with a lid to prevent an ink from leaking from the ink tank 38. Alternatively, the supply port 382 may be formed with a small opening to prevent an ink from leaking from the ink tank 38.

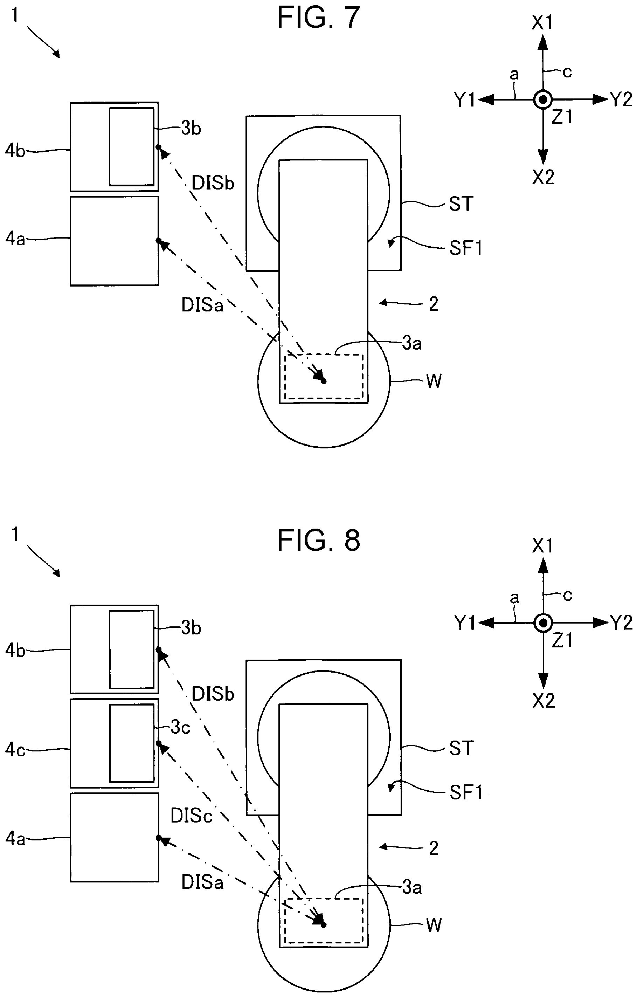

In addition, an ink may be supplied to the ink tank 38 manually. Alternatively, as shown in FIG. 7 described below, the three-dimensional object printing apparatus 1 may include a liquid supply mechanism 48 that supplies an ink to the ink tank 38.

Next, the configuration of the holding mechanism 4 will be described.

As described in FIG. 1, the holding mechanism 4 includes a main body member 410, the support column 420, and the maintenance unit 46. The main body member 410 includes a first part 411 coupled to the pedestal ST shown in FIG. 1, a second part 412 on which the maintenance unit 46 is disposed, a third part 413 that supports the first support portion 331 of the head unit 3, and a fourth part 414 that supports the third support portion 333 of the head unit 3. The support column 420 includes a plurality of support columns 421, a plurality of support columns 422, a plurality of support columns 423, and a plurality of support columns 424. The plurality of support columns 421 support the second part 412 with an interval in the Z1 direction with respect to the first part 411, and the plurality of support columns 422 support the third part 413 with an interval in the Z1 direction with respect to the second part 412. In addition, the plurality of support columns 423 support the fourth part 414 with an interval in the Z1 direction with respect to the third part 413, and the plurality of support columns 424 support the maintenance unit 46 with an interval in the Z1 direction with respect to the second part 412. The maintenance unit 46 is positioned between the second part 412 and the third part 413 in a direction along the Z-axis.

In the example shown in FIG. 4, the first part 411 and the second part 412 are formed in a plate shape with a surface perpendicular to the Z-axis. In addition, the third part 413 has an opening, which penetrates in the direction along the Z-axis, in the center. Further, the third part 413 has an opening, which penetrates in the direction along the Z-axis, in a portion where the second support portion 332 of the head unit 3 or the like is positioned. In addition, the fourth part 414 is disposed such that the fourth part 414 does not overlap with the second support portion 332 of the head unit 3 and a part of the fourth part 414 overlaps with the third support portion 333 of the head unit 3 when the holding mechanism 4 is viewed in the Z1 direction in a state where the head unit 3 is held by the holding mechanism 4.

It should be noted that the configuration of the head unit 3 is not limited to the examples shown in FIGS. 3 and 4. Similarly, the configuration of the holding mechanism 4 is not limited to the example shown in FIG. 4. For example, the head unit 3 may be formed such that the third support portion 333 of the support 330 is at the same position as the first support portion 331 in the direction along the c-axis. In this case, as the holding mechanism 4 that holds the head unit 3 formed such that the third support portion 333 of the support 330 is at the same position as the first support portion 331, for example, a configuration in which the fourth part 414 and the plurality of support columns 423 are omitted from the holding mechanism 4 shown in FIG. 4 is adopted.

In the above description, in the present embodiment, the three-dimensional object printing apparatus 1 includes the head unit 3a including the liquid discharge head 30 that discharges the first liquid, the head unit 3b including the liquid discharge head 30 that discharges the second liquid, and the robot 2 that moves the head unit 3a with respect to the three-dimensional workpiece W in a state in which the head unit 3a is mounted, and that moves the head unit 3b with respect to the workpiece W in a state in which the head unit 3b is mounted. The head unit 3a and the head unit 3b are attachable to and detachable from the robot 2.

As described above, in the present embodiment, the first liquid and the second liquid are discharged onto the workpiece W by using the head unit 3a and the head unit 3b, which are attachable to and detachable from the robot 2. That is, in the present embodiment, the head unit 3 mounted on the robot 2 is replaced according to a liquid discharged onto the workpiece W. Therefore, in the present embodiment, the head unit 3 can be downsized as compared to a configuration in which the first liquid and the second liquid are discharged by one head unit. As a result, in the present embodiment, it is possible to execute printing on a curved surface with higher accuracy as compared to a configuration in which the first liquid and the second liquid is discharged by one head unit.

In addition, in the present embodiment, the head unit 3a includes the ink tank 38 in which the first liquid is stored, and the head unit 3b includes the ink tank 38 in which the second liquid is stored. As described above, in the present embodiment, since the head unit 3 includes the ink tank 38, a tube for transporting an ink from the outside of the head unit 3 to the liquid discharge head 30 is not necessary. Therefore, in the present embodiment, the configuration of the three-dimensional object printing apparatus 1 can be simplified, and the operation range of the robot 2 can be prevented from being restricted because of the tube.

In addition, in the present embodiment, the head unit 3a includes the self-sealing valve 310 that adjusts a pressure applied to the first liquid supplied from the ink tank 38 to the liquid discharge head 30. The head unit 3b includes the self-sealing valve 310 that adjusts a pressure applied to the second liquid supplied from the ink tank 38 to the liquid discharge head 30. As described above, in the present embodiment, each head unit 3 includes the self-sealing valve 310. Therefore, in the present embodiment, even when the head unit 3 mounted on the robot 2 is replaced, a pressure applied to a liquid can be adjusted in the head unit 3 mounted on the robot 2. Therefore, in the present embodiment, even when the posture of the head unit 3 mounted on the robot 2 changes, a pressure applied to a liquid can be adjusted in the head unit 3 mounted on the robot 2, so that the liquid can be appropriately discharged from the liquid discharge head 30 to the workpiece W.

In addition, in the present embodiment, the robot 2 includes the irradiation section 260 that is provided separately from the head units 3a and 3b and that irradiates the first liquid and the second liquid with energy for curing. As described above, in the present embodiment, since the irradiation section 260 is provided in the robot 2, it is not necessary to detach the wiring electrically coupled to the irradiation section 260 even when the head unit 3 is replaced. Therefore, in the present embodiment, it is possible to reduce the complication of the configuration around the irradiation section 260 as compared to a configuration in which it is necessary to detach the wiring electrically coupled to the irradiation section 260 when the head unit 3 is replaced.

In addition, in the present embodiment, the robot 2 includes the heating section 250 that is provided separately from the head units 3a and 3b and that heats a liquid. The heating section 250 heats the first liquid in a state in which the head unit 3a is mounted. As described above, in the present embodiment, since the heating section 250 is provided in the robot 2, it is not necessary to detach the wiring electrically coupled to the heating section 250 even when the head unit 3 is replaced. Therefore, in the present embodiment, it is possible to reduce the complication of the configuration around the heating section 250 as compared to a configuration in which it is necessary to detach the wiring electrically coupled to the heating section 250 when the head unit 3 is replaced.

In addition, in the present embodiment, the head unit 3a includes the control module 36 that generates the drive signal Com for driving the liquid discharge head 30, and the battery 34 that stores power to be supplied to the control module 36. The head unit 3b includes the control module 36 that generates the drive signal Com for driving the liquid discharge head 30, and the battery 34 that stores power to be supplied to the control module 36.

As described above, in the present embodiment, since each head unit 3 includes the control module 36 and the battery 34, it is possible to reduce the complication of the configuration of the three-dimensional object printing apparatus 1. For example, in a configuration in which the control module 36 is provided in the robot 2, a part of the wiring that couples the control module 36 and the liquid discharge head 30 is disposed in the robot 2, and another part of the wiring is disposed in the head unit 3. In this case, since the head unit 3 is attachable to and detachable from the robot 2, the wiring disposed in the head unit 3 needs to be coupled to the wiring disposed in the robot 2 in a detachable manner. Therefore, in the configuration in which the control module 36 is provided in the robot 2, there is a concern that a coupling part between the wiring disposed in the robot 2 and the wiring disposed in the head unit 3 is complicated. On the other hand, in the present embodiment, since each head unit 3 includes the control module 36, it is not necessary to configure the wiring that couples the control module 36 and the liquid discharge head 30 in a detachable manner. In addition, in the present embodiment, since each head unit 3 includes the control module 36 and the battery 34, it is not necessary to configure the wiring that couples the battery 34 and the control module 36 in a detachable manner. As a result, in the present embodiment, the configuration of the three-dimensional object printing apparatus 1 can be simplified.

In addition, in the present embodiment, the three-dimensional object printing apparatus 1 further includes the transmission control section 72 that transmits the print data Img to the control module 36 of the head unit 3a and the control module 36 of the head unit 3b. The transmission control section 72 transmits the print data Img to the control module 36 of the head unit 3b in a state in which the head unit 3b is not mounted on the robot 2. When the head unit 3b is mounted on the robot 2, the control module 36 of the head unit 3b supplies the drive signal Com to the liquid discharge head 30 based on the print data lmg. As described above, in the present embodiment, the print data Img is transmitted to the control module 36 of the head unit 3b that is not mounted on the robot 2 as well, so that the throughput from the mounting of the head unit 3b on the robot 2 to the supply of the drive signal Com to the liquid discharge head 30 can be improved.

In addition, in the present embodiment, the three-dimensional object printing apparatus 1 further includes the maintenance unit 46 that performs maintenance on the liquid discharge head 30 of the head unit 3a and the liquid discharge head 30 of the head unit 3b. The maintenance unit 46 performs maintenance on the liquid discharge head 30 of the head unit 3a in a state in which the head unit 3a is not mounted on the robot 2, and performs maintenance on the liquid discharge head 30 of the head unit 3b in a state in which the head unit 3b is not mounted on the robot 2. As described above, in the present embodiment, since it is possible to perform maintenance on the liquid discharge head 30 of the head unit 3 that is not mounted on the robot 2, the maintenance of the liquid discharge head 30 can be efficiently executed.

In addition, in the present embodiment, the three-dimensional object printing apparatus 1 further includes the holding mechanism 4a that holds the head unit 3a and the holding mechanism 4b that holds the head unit 3b. The robot 2 is positioned between the holding mechanism 4a and the holding mechanism 4b when the robot 2 is viewed in the X1 direction which is the direction parallel to the installation surface SF1 on which the robot 2 is installed and which is the direction facing the robot 2 from the place where the workpiece W is disposed. Therefore, in the present embodiment, it is possible to prevent the movement amount of the robot 2 when the head unit 3 is mounted on the robot 2 from being increased by the head unit 3 mounted on the robot 2.

### 2. Modification Example

Each embodiment above can be variously modified. A specific embodiment of modification will be described below. Two or more aspects selected in any manner from the following examples can be appropriately combined with each other within a range not inconsistent with each other. In addition, in the modification examples described below, elements having the same effects and functions as those of the embodiment will be given the reference numerals used in the description above, and each detailed description thereof will be appropriately omitted.

### First Modification Example

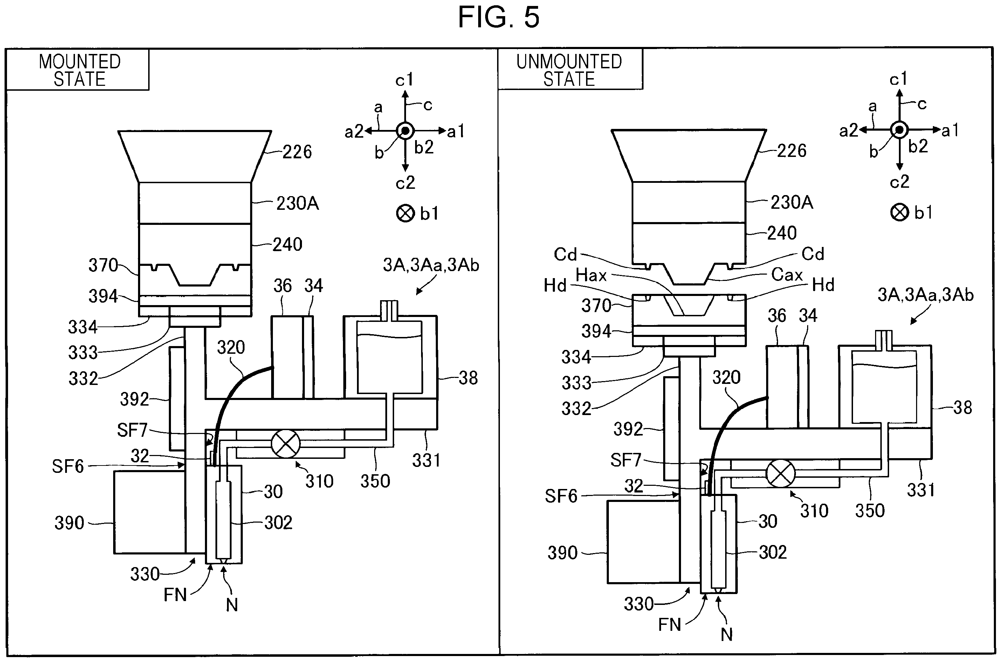

In the above-described embodiment, a case where the heating section 250 and the irradiation section 260 are provided in the robot 2 is described as an example, but the present disclosure is not limited to such an aspect. For example, as shown in FIG. 5, an irradiation section 390 and a heating section 392 may be provided in each of head units 3Aa and 3Ab. In this case, the heating section 250 and the irradiation section 260 may be omitted from the robot 2. Hereinafter, the head units 3Aa and 3Ab may be collectively referred to as a head unit 3A.

FIG. 5 is an explanatory diagram for describing the head unit 3A according to a first modification example. As in FIG. 3, FIG. 5 schematically shows a structure of the head unit 3A when the head unit 3A is viewed in the b2 direction. For example, a "mounted state" in FIG. 5 indicates a state in which the head unit 3A is mounted on the robot 2, and an "unmounted state" in FIG. 5 indicates a state in which the head unit 3A is removed from the robot 2. The same elements as those described in FIGS. 1 to 4 are denoted by the same reference signs, and detailed descriptions thereof will be omitted. The head unit 3Aa corresponds to the head unit 3a, and the head unit 3Ab corresponds to the head unit 3b. The head unit 3Aa is another example of the "first head unit", and the head unit 3Ab is another example of a "second head unit".

The head unit 3A is the same as the head unit 3 according to the above-described embodiment, that is, the head unit 3 shown in FIG. 3, except that the head unit 3A includes the irradiation section 390, the heating section 392, and a heat insulator 394. In addition, the robot 2 according to the present modification example is the same as the robot 2 according to the above-described embodiment, except that the heat insulator 252, the heating section 250, and the irradiation section 260 shown in FIG. 3 are omitted from the robot 2 according to the above-described embodiment, and the fixing member 230A is included instead of the fixing member 230 shown in FIG. 3. The heating section 392 is the same as the heating section 250 of the above-described embodiment, the heat insulator 394 is the same as the heat insulator 252 of the above-described embodiment, and the irradiation section 390 is the same as the irradiation section 260 of the above-described embodiment. The heating section 392 included in the head unit 3Aa is an example of a "third heating section", and the heating section 392 included in the head unit 3Ab is an example of a "fourth heating section".

The fixing member 230A is positioned between the arm 226 of the robot 2 and the tool changer 240 of the robot 2, and is coupled to the arm 226 and the tool changer 240. The tool changer 240 may be coupled to the arm 226 without using the fixing member 230A.

The heat insulator 394 is positioned between the tool changer 370 of the head unit 3A and the fourth support portion 334 of the support 330 of the head unit 3A, and is coupled to the tool changer 370 and the fourth support portion 334.

The irradiation section 390 and the heating section 392 are attached to the surface SF6 of the second support portion 332 of the support 330. For example, the irradiation section 390 is attached to the surface SF6 near an end portion closer to the liquid discharge head 30 among end portions of the second support portion 332 in the direction along the c-axis. In addition, the heating section 392 is attached to a position in the surface SF6 of the second support portion 332 in the c1 direction with respect to the irradiation section 390.

As described above, in the present modification example as well, the irradiation section 390 is positioned in the rear with respect to the liquid discharge head 30 in the moving direction of the liquid discharge head 30. Therefore, in the present modification example as well, the irradiation section 390 can irradiate an ink with energy immediately after the ink lands on the workpiece W from the liquid discharge head 30. In addition, in the present modification example, since the irradiation section 390 can be disposed close to the liquid discharge head 30, a time from discharge of an ink to curing can be shortened. As a result, in the present modification example, degradation of image quality due to bleeding, spreading, and the like of the ink can be reduced.

In addition, in the present modification example, as described above, since the heat insulator 394 is disposed between the tool changer 370 and the fourth support portion 334, transfer of heat from a heater included in the heating section 392 to the tool changer 370 can be reduced. In addition, in the present modification example, since the heating section 392 can be disposed close to the liquid discharge head 30, the ink can be appropriately heated in each head unit 3A. In addition, for example, in a configuration in which the common heating section 250 is used for the plurality of head units 3, there is a concern that thermal conductivity at a coupling part between the tool changer 370 of the head unit 3 and the tool changer 240 of the robot 2 varies in the plurality of head units 3. In the present modification example, there is no coupling part between the tool changer 370 of the head unit 3A and the tool changer 240 of the robot 2 in a path from the heater included in the heating section 392 to the liquid discharge head 30 and the ink tank 38. Therefore, in the present modification example, it is possible to suppress an increase in individual differences of the head unit 3A with respect to the heating of an ink, and it is possible to appropriately heat an ink with each head unit 3A.

The power may be supplied to the irradiation section 390 and the heating section 392 from the battery 34, or the power may be supplied to the irradiation section 390 and the heating section 392 via the robot 2.

In addition, the configuration of the head unit 3A is not limited to the example shown in FIG. 5. For example, the heating section 392 may be disposed between the second support portion 332 of the support 330 and the liquid discharge head 30, and may be attached to the surface SF7 of the second support portion 332. In this case, the head unit 3A may be formed such that the third support portion 333 of the support 330 is at the same position as the first support portion 331 in the direction along the c-axis.

In addition, one or both of the head units 3Aa and 3Ab need not include the irradiation section 390. For example, when an ink used in the head unit 3Ab is a clear ink, irradiation of the clear ink with energy is not necessary, and thus the head unit 3Ab need not include the irradiation section 390. That is, among a plurality of head units 3A, the irradiation section 390 may be provided in a specific head unit 3A that needs curing of an ink.

In addition, the robot 2 may include the irradiation section 260 even when the head unit 3A is adopted. In this case, even when the curing of an ink by the irradiation section 390 is insufficient, the ink can be reliably cured by the irradiation section 260.

As described above, in the present modification example as well, the same effects as those of the above-described embodiment can be obtained. In addition, in the present modification example, the head unit 3Aa includes the irradiation section 390 that irradiates the first liquid with energy for curing the first liquid. Therefore, in the present modification example, the irradiation section 390 can be disposed close to the liquid discharge head 30. As a result, in the present modification example, the time from the discharge of an ink to the curing can be shortened, and the degradation of the image quality due to the bleeding, spreading, and the like of the ink can be reduced.

In addition, in the present modification example, the head unit 3Aa includes the heating section 392 that heats the first liquid, and the head unit 3Ab includes the heating section 392 that heats the second liquid. Therefore, in the present modification example, the heating section 392 can be disposed close to the liquid discharge head 30 in each head unit 3A. Therefore, in the present modification example, an ink can be appropriately heated in each head unit 3A.

In addition, in the present modification example, the heating section 392 included in the head unit 3Ab may heat the second liquid in a state in which the head unit 3Ab is not mounted on the robot 2. Similarly, the heating section 392 included in the head unit 3Aa may heat the first liquid in a state in which the head unit 3Aa is not mounted on the robot 2. In this aspect, during a period in which the head unit 3A is not used for printing, an ink in the liquid discharge head 30 and an ink in the ink tank 38 included in the head unit 3A that is not used for printing can be heated. As a result, in the present aspect, when the head unit 3A is used for printing, a time from the mounting of the head unit 3A on the robot 2 to the heating of an ink can be shortened, and a time from start to end of the printing by the three-dimensional object printing apparatus 1 can be shortened. It should be noted that the period in which the head unit 3A is not used for printing includes, for example, a standby period for printing, an initial setting period, and a startup period for the robot 2. In this aspect, the heating section 392 is an example of a "second heating section".

### Second Modification Example

In the above-described embodiment, the heating section 250 and the irradiation section 260 are provided in the robot 2, and in the first modification example described above, a case where the heating section 392 and the irradiation section 390 are provided in the head unit 3A is described as an example, but the present disclosure is not limited to such an aspect. For example, the heating section 250 may be provided in the robot 2, and the irradiation section 390 may be provided in the head unit 3A. Alternatively, the irradiation section 260 may be provided in the robot 2, and the heating section 392 may be provided in the head unit 3A. In the present modification example as well, the same effects as those of the embodiment and modification example described above can be obtained.

Further, in the above-described embodiment, one or both of the heating section 250 and the irradiation section 260 may be omitted, and in the first modification example described above, one or both of the heating section 392 and the irradiation section 390 may be omitted. In this case as well, the head unit 3 or 3A can be downsized.

In addition, in the embodiment described above, the irradiation section 260 may be provided separately from the robot 2 and the head unit 3. In this case as well, the same effects as those of the above-described embodiment can be obtained.

### Third Modification Example

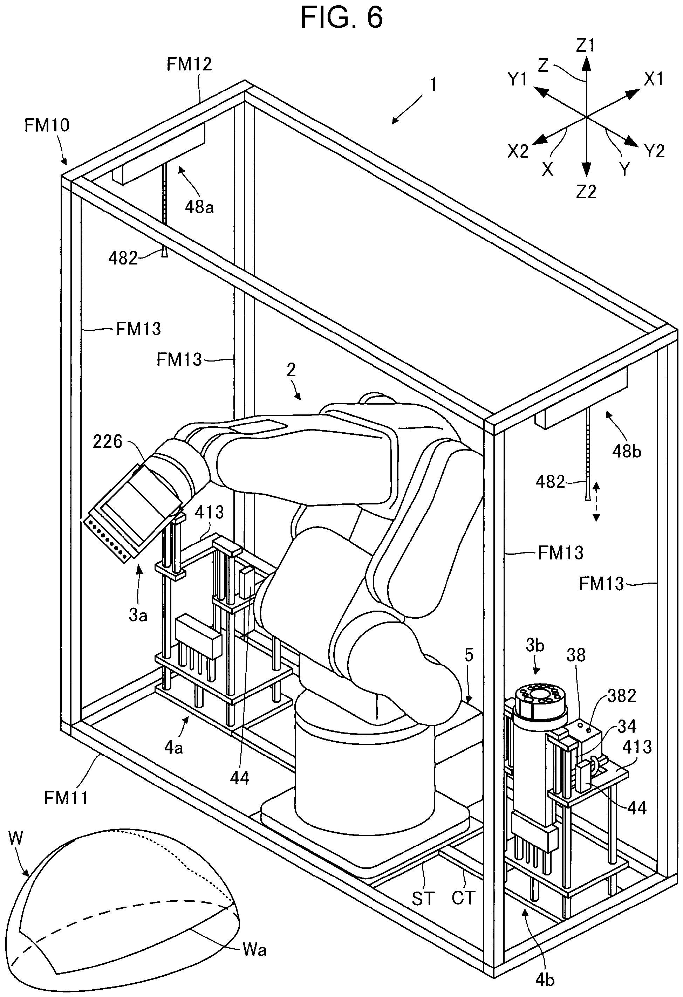

In the embodiment and modification examples described above, as shown in FIG. 6, the three-dimensional object printing apparatus 1 may further include liquid supply mechanisms 48a and 48b that supply an ink to the ink tank 38 of the head unit 3a and the ink tank 38 of the head unit 3b, respectively. Similarly, the three-dimensional object printing apparatus 1 may further include the liquid supply mechanisms 48a and 48b that supply an ink to the ink tank 38 of the head unit 3Aa and the ink tank 38 of the head unit 3Ab, respectively. Hereinafter, the liquid supply mechanisms 48a and 48b may be collectively referred to as the liquid supply mechanism 48.

FIG. 6 is an explanatory diagram for describing the three-dimensional object printing apparatus 1 according to a third modification example. The same elements as those described in FIGS. 1 to 5 are denoted by the same reference signs, and detailed descriptions thereof will be omitted. In FIG. 6, the three-dimensional object printing apparatus 1 is described as an example in which the head unit 3 is adopted, but in the present modification example as well, the head unit 3A shown in FIG. 5 may be adopted. The three-dimensional object printing apparatus 1 shown in FIG. 6 is the same as the three-dimensional object printing apparatus 1 shown in FIG. 1, except that the three-dimensional object printing apparatus 1 shown in FIG. 6 includes a power supply mechanism 44, the liquid supply mechanism 48, and a frame FM10.

The frame FM10 includes a quadrangular frames FM11 and FM12, and a plurality of frames FM13 that support the frame FM12 at intervals from the frame FM11 in the Z1 direction. The frame FM11 surrounds the holding mechanism 4a, the holding mechanism 4b, and the pedestal ST, and is coupled to the holding mechanism 4a, the holding mechanism 4b, and the pedestal ST. In addition, the liquid supply mechanisms 48a and 48b are attached to the frame FM12. The elements including the liquid supply mechanism 48a and the liquid supply mechanism 48b are examples of a "liquid supply mechanism".

The liquid supply mechanism 48 includes a pipe 482 that is coupled to the supply port 382 of the ink tank 38 when supplying an ink to the ink tank 38. The pipe 482 is provided to be extendable, for example, in the direction along the Z-axis.

For example, under the control of the controller 5, the liquid supply mechanism 48a couples the pipe 482 to the supply port 382 of the ink tank 38 of the head unit 3a when supplying an ink to the ink tank 38 of the head unit 3a held by the holding mechanism 4a. Then, the ink is supplied from an ink bottle (not shown), in which the ink to be used in the head unit 3a is stored, to the ink tank 38 via the liquid supply mechanism 48a. In addition, under the control of the controller 5, the liquid supply mechanism 48b couples the pipe 482 to the supply port 382 of the ink tank 38 of the head unit 3b when supplying an ink to the ink tank 38 of the head unit 3b held by the holding mechanism 4b. Then, the ink is supplied from an ink bottle (not shown), in which the ink to be used in the head unit 3b is stored, to the ink tank 38 via the liquid supply mechanism 48b. For example, a capacity of an ink that is storable in the ink bottle is larger than the capacity of an ink that is storable in the ink tank 38.

As described above, in the present modification example, an ink can be supplied to the ink tank 38 of the head unit 3 that is not used for printing during the period in which the head unit 3 is held by the holding mechanism 4, that is, during the period in which the head unit 3 is not used for printing. As a result, in the present modification example, it is possible to shorten a standby time for supplying an ink to the ink tank 38, and it is possible to prevent the time from the start to the end of printing by the three-dimensional object printing apparatus 1 from being increased. The coupling of the pipe 482 to the supply port 382 of the ink tank 38 may be performed manually. In addition, an attachment position of the liquid supply mechanism 48 is not limited to the example shown in FIG. 6. For example, the liquid supply mechanism 48 may be attached to the frame FM13.

The power supply mechanism 44 is, for example, a charging device that charges the battery 34. The coupling between the power supply mechanism 44 and the battery 34 when the power supply mechanism 44 charges the battery 34 may be wireless or wired.

In the example shown in FIG. 6, the power supply mechanism 44a is disposed in the third part 413 of the main body member 410 of the holding mechanism 4a, and the power supply mechanism 44b is disposed in the third part 413 of the main body member 410 of the holding mechanism 4b. For example, the power supply mechanism 44a supplies power to the battery 34 of the head unit 3a during the period in which the head unit 3a is held by the holding mechanism 4a, that is, during the period in which the head unit 3a is mounted on the robot 2. In addition, for example, the power supply mechanism 44b supplies power to the battery 34 of the head unit 3b during the period in which the head unit 3b is held by the holding mechanism 4b, that is, during the period in which the head unit 3b is not mounted on the robot 2.

As described above, in the present modification example, power can be supplied to the battery 34 included in the head unit 3 that is not used for printing during the period in which the head unit 3 is held by the holding mechanism 4, that is, during the period in which the head unit 3 is not used for printing. As a result, in the present modification example, it is possible to shorten the standby time for supplying power to the battery 34, and it is possible to prevent the time from the start to the end of printing by the three-dimensional object printing apparatus 1 from being increased. The coupling between the power supply mechanism 44 and the battery 34 may be manually performed or may be automatically executed under the control of the controller 5. In addition, an attachment position of the power supply mechanism 44 is not limited to the example shown in FIG. 6. For example, the power supply mechanism 44 may be attached to the frame FM13.

As described above, in the present modification example as well, the same effects as those of the embodiment and modification examples described above can be obtained. In addition, in the present modification example, the three-dimensional object printing apparatus 1 further includes the liquid supply mechanism 48 that supplies the first liquid and the second liquid to the ink tank 38 of the head unit 3a and the ink tank 38 of the head unit 3b, respectively. The liquid supply mechanism 48 supplies the first liquid to the ink tank 38 of the head unit 3a in a state in which the head unit 3a is not mounted on the robot 2, and supplies the second liquid to the ink tank 38 of the head unit 3b in a state in which the head unit 3b is not mounted on the robot 2. As described above, in the present modification example, since a liquid can be supplied to the ink tank 38 of the head unit 3 that is not used for printing, the standby time for supplying the liquid to the ink tank 38 can be shortened. As a result, in the present modification example, it is possible to prevent the time from the start to the end of printing by the three-dimensional object printing apparatus 1 from being increased.

In the above description, in the present modification example, the three-dimensional object printing apparatus 1 further includes the power supply mechanism 44 that supplies power to the battery 34 of the head unit 3a and the battery 34 of the head unit 3b. The power supply mechanism 44 supplies power to the battery 34 of the head unit 3a in a state in which the head unit 3a is not mounted on the robot 2, and supplies power to the battery 34 of the head unit 3b in a state in which the head unit 3b is not mounted on the robot 2. As described above, in the present modification example, since power can be supplied to the battery 34 of the head unit 3 that is not used for printing, the standby time for supplying power to the battery 34 can be shortened. As a result, in the present modification example, it is possible to prevent the time from the start to the end of printing by the three-dimensional object printing apparatus 1 from being increased.

It should be noted that one of the power supply mechanism 44 and the liquid supply mechanism 48 may be omitted from the three-dimensional object printing apparatus 1 shown in FIG. 6. In this case as well, the same effects as those of the present modification example described above can be obtained, except for the effect obtained by the omitted element.

### Fourth Modification Example

In the embodiment and modification examples described above, a case where the maintenance unit 46 is provided for each holding mechanism 4 is described as an example, but the present disclosure is not limited to such an aspect. For example, the three-dimensional object printing apparatus 1 may include the maintenance unit 46 that is commonly used by the plurality of head units 3. Specifically, the three-dimensional object printing apparatus 1 may include a maintenance mechanism with the same configuration as the holding mechanism 4 shown in FIG. 4, as the maintenance unit 46 commonly used by the plurality of head units 3. In this case, the maintenance unit 46 may be omitted from each holding mechanism 4.

For example, the aforementioned maintenance mechanism may perform maintenance on the liquid discharge head 30 of the head unit 3a in a state in which the head unit 3a is mounted on the robot 2, and may perform maintenance on the liquid discharge head 30 of the head unit 3b in a state in which the head unit 3b is mounted on the robot 2. In the present aspect, since it is possible to perform maintenance on the liquid discharge head 30 of the head unit 3 in a state in which the head unit 3 is mounted on the robot 2, a time required for maintenance can be shortened by a time required for attaching the head unit 3 to the robot 2 and detaching the head unit 3 from the robot 2. As a result, in the present aspect, the time required for maintenance of the liquid discharge head 30 of the head unit 3 mounted on the robot 2 can be shortened.

In the present modification example as well, the aforementioned maintenance mechanism may perform maintenance on the liquid discharge head 30 of the head unit 3 only when the head unit 3 is removed from the robot 2. In the present aspect, since it is possible to perform maintenance on the liquid discharge head 30 of the head unit 3 that is not mounted on the robot 2, the maintenance of the liquid discharge head 30 can be efficiently executed.

In addition, in the present modification example, when each holding mechanism 4 includes the maintenance unit 46, it is possible to shorten the time required for the maintenance of the liquid discharge head 30 of the head unit 3 mounted on the robot 2, while efficiently executing the maintenance of the liquid discharge head 30.

### Fifth Modification Example

In the embodiment and modification examples described above, a case is described as an example, in which the holding mechanism 4a is disposed at the position in the Y1 direction with respect to the pedestal ST on which the base portion 210 of the robot 2 is installed and the holding mechanism 4b is disposed at the position in the Y2 direction with respect to the pedestal ST, but the present disclosure is not limited to such an aspect. For example, both the holding mechanisms 4a and 4b may be disposed at positions in the Y1 direction with respect to the pedestal ST, or both the holding mechanisms 4a and 4b may be disposed at positions in the Y2 direction with respect to the pedestal ST.

FIG. 7 is an explanatory diagram for describing the three-dimensional object printing apparatus 1 according to a fifth modification example. FIG. 7 schematically shows the three-dimensional object printing apparatus 1 when the three-dimensional object printing apparatus 1 is viewed in the Z1 direction. The same elements as those described in FIGS. 1 to 6 are denoted by the same reference signs, and detailed descriptions thereof will be omitted. In FIG. 7, the three-dimensional object printing apparatus 1 is described as an example in which the head unit 3 is adopted, but in the present modification example as well, the head unit 3A shown in FIG. 5 may be adopted. The three-dimensional object printing apparatus 1 shown in FIG. 7 is the same as the three-dimensional object printing apparatus 1 shown in FIG. 1, except that both the holding mechanisms 4a and 4b are disposed at positions in the Y1 direction with respect to the pedestal ST.

As shown in FIG. 7, when the robot 2 is viewed in the X1 direction which is the direction parallel to the installation surface SF1 on which the robot 2 is installed and which is a direction facing the robot 2 from the place where the workpiece W is disposed, the holding mechanism 4a and the holding mechanism 4b are positioned in the same direction with respect to the robot 2, in a direction parallel to the installation surface SF1 and perpendicular to the X1 direction, that is, in a direction along the Y-axis. As described above, in the present modification example, since the holding mechanism 4b is disposed close to the holding mechanism 4a, the movement amount of the robot 2 when replacing the head unit 3 mounted on the robot 2 can be reduced.

In addition, in the present modification example, a case is assumed in which an ink used in the head unit 3a is a black ink and an ink used in the head unit 3b is an ink other than a black ink. As shown in FIG. 7, a distance DISa between the holding mechanism 4a and the workpiece W is shorter than a distance DISb between the holding mechanism 4b and the workpiece W. In general printing, a usage frequency of a black ink is higher than a usage frequency of inks in other colors. As described above, in the present modification example, since the holding mechanism 4a that holds the head unit 3a including the liquid discharge head 30 that discharges an ink with a high usage frequency is disposed close to the workpiece W, the throughput of the printing can be improved.

### Sixth Modification Example

In the embodiment and modification examples described above, a case where the three-dimensional object printing apparatus 1 includes two head units 3 is described as an example, but the present disclosure is not limited to such an aspect. For example, the three-dimensional object printing apparatus 1 may have three or more head units 3.

FIG. 8 is an explanatory diagram for describing the three-dimensional object printing apparatus 1 according to a sixth modification example. FIG. 8 schematically shows the three-dimensional object printing apparatus 1 when the three-dimensional object printing apparatus 1 is viewed in the Z1 direction. The same elements as those described in FIGS. 1 to 7 are denoted by the same reference signs, and detailed descriptions thereof will be omitted. In FIG. 8, the three-dimensional object printing apparatus 1 is described as an example in which the head unit 3 is adopted, but in the present modification example as well, the head unit 3A shown in FIG. 5 may be adopted. The three-dimensional object printing apparatus 1 shown in FIG. 8 is the same as the three-dimensional object printing apparatus 1 shown in FIG. 7, except that the three-dimensional object printing apparatus 1 shown in FIG. 8 includes a head unit 3c and a holding mechanism 4c. The head unit 3c is an example of a "third head unit", and the holding mechanism 4c is an example of a "third holding mechanism".

The head unit 3c is the same as the head unit 3a. However, a color of an ink used in the head unit 3c is different from the color of an ink used in the head unit 3a. For example, the ink used in the head unit 3a is a black ink, and the ink used in the head unit 3c is a magenta ink. An ink used in head unit 3b is a yellow ink.

The holding mechanism 4c is the same as the holding mechanism 4a. In the present modification example, all the holding mechanisms 4a, 4b, and 4c are disposed at positions in the Y1 direction with respect to the pedestal ST. For example, a distance DISc between the holding mechanism 4c and the workpiece W is shorter than the distance DISb between the holding mechanism 4b and the workpiece W, and is longer than the distance DISa between the holding mechanism 4a and the workpiece W. In general printing, the usage frequency of a black ink is higher than the usage frequency of inks in other colors, and the usage frequency of a magenta ink is higher than a usage frequency of a yellow ink. In the present modification example, since the holding mechanism 4 that holds the head unit 3 including the liquid discharge head 30 that discharges an ink with a high usage frequency is disposed close to the workpiece W, the throughput of the printing can be improved.

In this manner, in the present modification example, the holding mechanism 4 is disposed such that a distance between the holding mechanism 4 that holds the head unit 3 using an ink with a high usage frequency and the workpiece W is shorter than a distance between the holding mechanism 4 that holds the head unit 3 using an ink with a low usage frequency and the workpiece W.

The combination of inks used in the head units 3a, 3b, and 3c is not limited to the aforementioned examples. For example, the color of an ink used in the head unit 3a may be the same as a color of an ink used in the head unit 3b. In this case, for example, when an ink of the head unit 3a mounted on the robot 2 runs out, the head unit 3a can be replaced with the head unit 3b, which uses ink in the same color as that used in the head unit 3a, allowing printing to be restarted without standby until an ink to be supplied to the ink tank 38 of the head unit 3a.

In addition, for example, when the three-dimensional object printing apparatus 1 includes four head units 3, a black ink, a cyan ink, a magenta ink, and a black ink may be used in the four head units 3, respectively. Since a black ink and a yellow ink are used together with a low frequency, the holding mechanism 4 that holds the head unit 3 using a black ink and the holding mechanism 4 that holds the head unit 3 using a yellow ink may be disposed apart from each other. For example, among four holding mechanisms 4 corresponding to the four head units 3, the holding mechanism 4 that holds the head unit 3 using a black ink is disposed at a position closest to the workpiece W. Among the four holding mechanisms 4, the holding mechanism 4 that holds the head unit 3 using a yellow ink may be disposed at a position farthest from the workpiece W. In addition, another holding mechanism 4 may be disposed between the holding mechanism 4 that holds the head unit 3 using a black ink and the holding mechanism 4 that holds the head unit 3 using a yellow ink.

In addition, when monochrome printing is frequently executed, the four holding mechanisms 4 corresponding to the four head units 3 may be disposed as follows. The holding mechanism 4 that holds the head unit 3 using a black ink may be disposed at a position closest to the workpiece W, and the holding mechanism 4 that holds the head unit 3 using a cyan ink may be disposed at a position farthest from the workpiece W. In addition, the holding mechanism 4 that holds the head unit 3 using a yellow ink may be disposed at a second closest position to the workpiece W, and the holding mechanism 4 that holds the head unit 3 using a magenta ink may be disposed at a third closest position to the workpiece W.

### Seventh Modification Example

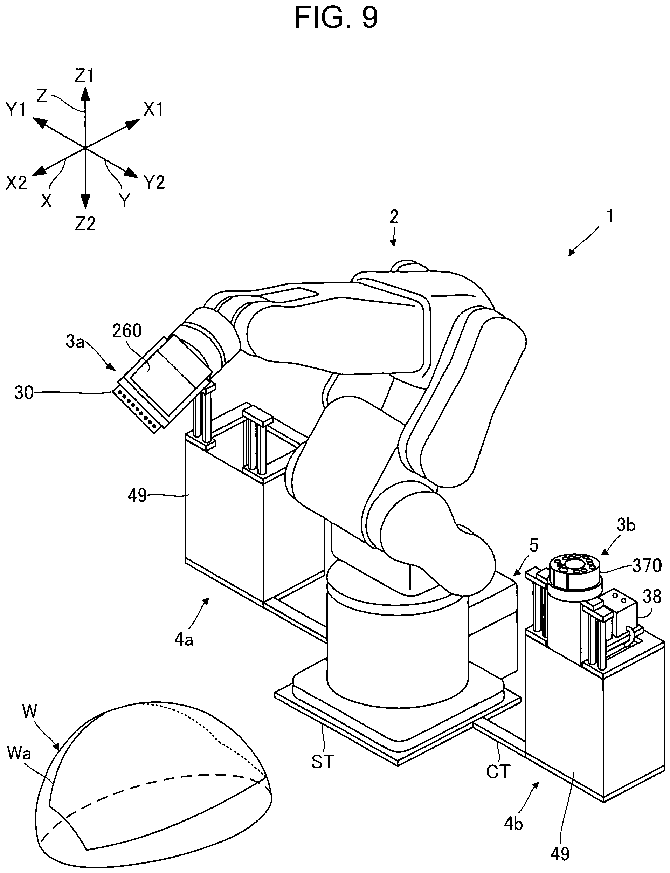

In the above-described embodiment and modification examples, as shown in FIG. 9, each holding mechanism 4 may include a light-blocking portion 49 that blocks light directed towards the liquid discharge head 30 of the head unit 3 held by the holding mechanism 4.

FIG. 9 is an explanatory diagram for describing the three-dimensional object printing apparatus 1 according to a seventh modification example. The same elements as those described in FIGS. 1 to 8 are denoted by the same reference signs, and detailed descriptions thereof will be omitted. In FIG. 9, the three-dimensional object printing apparatus 1 is described as an example in which the head unit 3 is adopted, but in the present modification example as well, the head unit 3A shown in FIG. 5 may be adopted. The three-dimensional object printing apparatus 1 shown in FIG. 9 is the same as the three-dimensional object printing apparatus 1 shown in FIG. 1, except that the light-blocking portion 49 is provided in the holding mechanism 4.

The holding mechanism 4a includes a light-blocking portion 49 that blocks light directed to the liquid discharge head 30 of the head unit 3a in a state in which the head unit 3a is held. Similarly, the holding mechanism 4b includes a light-blocking portion 49 that blocks light directed to the liquid discharge head 30 of the head unit 3b in a state in which the head unit 3b is held. For example, the light-blocking portion 49 is disposed between the irradiation section 260 and the liquid discharge head 30 of the head unit 3 held by the holding mechanism 4 to block light from the irradiation section 260. In the example shown in FIG. 9, a plate-like side wall surrounding the first part 411, the second part 412, and the third part 413 of the main body member 410 shown in FIG. 4 is provided as the light-blocking portion 49 in each holding mechanism 4. The shape and disposition of the light-blocking portion 49 are not particularly limited as long as the light from the irradiation section 260 can be blocked. The light-blocking portion 49 included in the holding mechanism 4a is an example of a "first light-blocking portion", and the light-blocking portion 49 included in the holding mechanism 4b is an example of a "second light-blocking portion".

As described above, in the present modification example as well, the same effects as those of the embodiment and modification examples described above can be obtained. In addition, in the present modification example, the holding mechanism 4a includes the light-blocking portion 49 that blocks the light directed to the liquid discharge head 30 of the head unit 3a in a state in which the head unit 3a is held, and the holding mechanism 4b includes the light-blocking portion 49 that blocks the light directed to the liquid discharge head 30 of the head unit 3b in a state in which the head unit 3b is held. As a result, in the present modification example, when light is emitted from the irradiation section 260, it is possible to prevent the light from the irradiation section 260 from hitting the liquid discharge head 30 of the head unit 3 held by the holding mechanism 4 to cure an ink. In addition, the head unit 3 with a low usage frequency may have a long standby time until being used for printing. In the present modification example, since each holding mechanism 4 includes the light-blocking portion 49 that blocks the light directed to the liquid discharge head 30, it is possible to reduce clogging of the nozzle N due to light reaching the liquid discharge head 30 even when a standby time of the head unit 3 until being used for printing is long.

### Eighth Modification Example

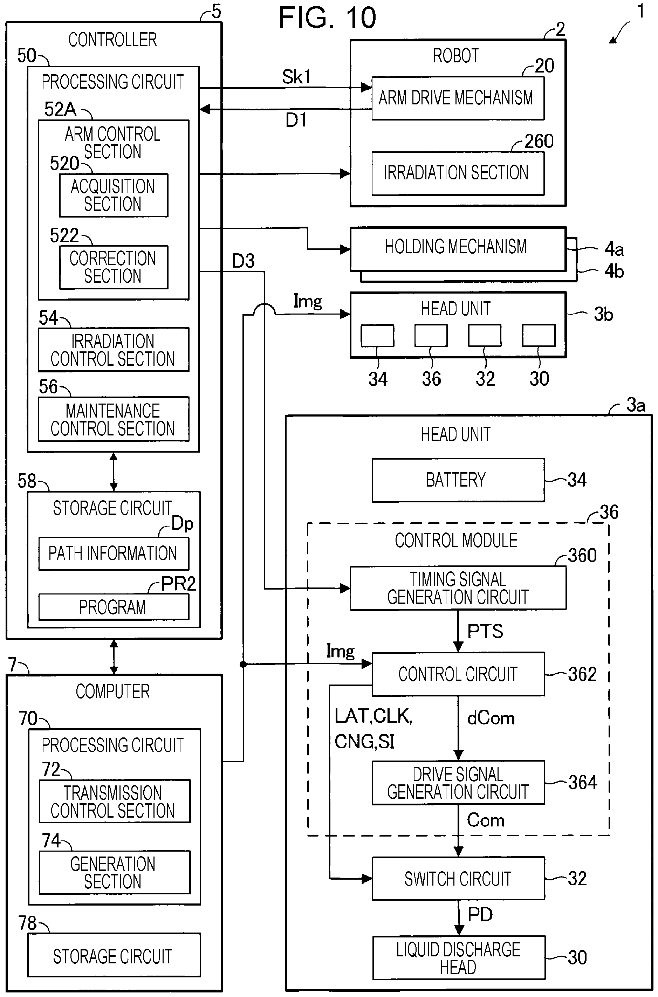

In the above-described embodiment and modification examples, as shown in FIG. 10, the three-dimensional object printing apparatus 1 may include a correction section 522 that corrects the path along which the robot 2 moves based on the respective mounting errors of the head units 3a and 3b when they are mounted on the robot 2.

FIG. 10 is a block diagram showing an electrical configuration of the three-dimensional object printing apparatus 1 according to an eighth modification example. The same elements as those described in FIGS. 1 to 9 are denoted by the same reference signs, and detailed descriptions thereof will be omitted. In FIG. 10, the three-dimensional object printing apparatus 1 is described as an example in which the head unit 3 is adopted, but in the present modification example as well, the head unit 3A shown in FIG. 5 may be adopted. The three-dimensional object printing apparatus 1 shown in FIG. 10 is the same as the three-dimensional object printing apparatus 1 shown in FIG. 2, except that the processing circuit 50 functions as an arm control section 52A including an acquisition section 520 and the correction section 522, instead of functioning as the arm control section 52 shown in FIG. 2.

A configuration of the controller 5 shown in FIG. 10 is the same as the configuration of the controller 5 shown in FIG. 2. However, the storage circuit 58 stores a program PR2 instead of the program PR1 shown in FIG. 2. Therefore, the processing circuit 50 shown in FIG. 10 functions as the arm control section 52A instead of the arm control section 52 shown in FIG. 2 by operating according to the program PR2 stored in the storage circuit 58. The processing circuit 50 shown in FIG. 10 also functions as the irradiation control section 54 and the maintenance control section 56, similarly to the processing circuit 50 shown in FIG. 2, by operating according to the program PR2. The arm control section 52A is the same as the arm control section 52 shown in FIG. 2, except that the arm control section 52A includes the acquisition section 520 and the correction section 522.

The acquisition section 520 acquires error information indicating respective mounting errors when the head unit 3a and the head unit 3b are mounted on the robot 2. The mounting error includes, for example, the deviation in the inclination or posture of the head unit 3 mounted on the robot 2, and the mechanical tolerances of the head unit 3 and the robot 2 itself. In addition, the mounting error may be detected, for example, at the start of use of the three-dimensional object printing apparatus 1, or may be detected at the time of shipment of the three-dimensional object printing apparatus 1. In addition, the mounting error may be detected, for example, when the head unit 3 is mounted on the robot 2, or may be detected during calibration in which the tool coordinate system and the base coordinate system or the robot coordinate system are associated with each other. Alternatively, the mounting error may be calculated based on a result of preliminary printing performed before main printing. In addition, the detection or calculation of the mounting error may be executed by a function block implemented by the processing circuit 50, or may be executed by an element outside the processing circuit 50. Alternatively, the three-dimensional object printing apparatus 1 may include a detection device such as an imaging device and a distance sensor for detecting or calculating the mounting error. It should be noted that the acquisition of error information by the acquisition section 520 is not limited to obtaining error information from the detection device or the like outside the processing circuit 50. For example, the acquisition of the error information by the acquisition section 520 includes acquiring the error information from an element other than the processing circuit 50 in the controller 5, and acquiring the error information from another functional block implemented by the processing circuit 50.

The correction section 522 corrects the path along which the robot 2 moves based on the mounting error indicated by the error information acquired by the acquisition section 520. For example, the correction section 522 may correct the path indicated by the path information Dp stored in the storage circuit 58 based on the mounting error indicated by the error information acquired by the acquisition section 520. Alternatively, the correction section 522 may correct parameters such as the transformation matrix or the inverse transformation matrix, which associate the tool coordinate system with the base coordinate system or the robot coordinate system, based on the mounting error indicated by the error information acquired by the acquisition section 520. That is, the correction section 522 may correct the path along which the robot 2 moves by correcting parameters such as the transformation matrix or the inverse transformation matrix.

As described above, in the present modification example as well, the same effects as those of the embodiment and modification examples described above can be obtained. In addition, in the present modification example, the three-dimensional object printing apparatus 1 further includes the acquisition section 520 that acquires error information indicating the respective mounting errors when the head unit 3a and the head unit 3b are mounted on the robot 2, and the correction section 522 that corrects the path along which the robot 2 moves based on the mounting error indicated by the error information. As a result, in the present modification example, since the error can be corrected for each head unit 3, a print quality can be improved.

### Ninth Modification Example

In the embodiment and modification examples described above, a case where the head unit 3 or 3A includes the control module 36 is described as an example, but the present disclosure is not limited to such an aspect. For example, some or all of the timing signal generation circuit 360, the control circuit 362, and the drive signal generation circuit 364 included in the control module 36 may be provided outside the head unit 3 or 3A. Specifically, for example, the robot 2 may include the timing signal generation circuit 360, the control circuit 362, and the drive signal generation circuit 364. Alternatively, for example, the head unit 3 or 3A may include the drive signal generation circuit 364, and the robot 2 may include the timing signal generation circuit 360 and the control circuit 362. In this case, the element including the drive signal generation circuit 364 and the switch circuit 32 included in the head unit 3a or 3Aa corresponds to the "first drive circuit", and the element including the drive signal generation circuit 364 and the switch circuit 32 included in the head unit 3b or 3Ab corresponds to the "second drive circuit". In addition, the control signal SI corresponds to "print data", and the control circuit 362 corresponds to "data transmission section". In the present modification example as well, the same effects as those of the embodiment and modification examples described above can be obtained.

### Tenth Modification Example

In the embodiment and modification examples described above, a case where the head unit 3 or 3A includes the battery 34 is described as an example, but the present disclosure is not limited to such an aspect. For example, the head unit 3 or 3A need not include the battery 34. In this case, the circuit, such as the switch circuit 32, provided in the head unit 3 or 3A may be supplied with power via the robot 2. In the present modification example as well, the same effects as those of the embodiment and modification examples described above can be obtained.

### Eleventh Modification Example

In the embodiment and modification examples described above, a case where one head unit 3 is held by one holding mechanism 4 is described as an example, but the present disclosure is not limited to such an aspect. For example, one holding mechanism 4 may hold the plurality of head units 3. That is, the three-dimensional object printing apparatus 1 may include the holding mechanism 4 that holds the plurality of head units 3. In the present modification example as well, the same effects as those of the embodiment and modification examples described above can be obtained.

### Twelfth Modification Example

In the embodiment and modification examples described above, a case where the three-dimensional object printing apparatus 1 includes the maintenance unit 46 is described as an example, but the present disclosure is not limited to such an aspect. For example, the three-dimensional object printing apparatus 1 need not include the maintenance unit 46. In the present modification example as well, the same effects as those of the embodiment and modification examples described above can be obtained, except for the effect obtained by the maintenance unit 46.

### 3. Appendixes

From the embodiments exemplified above, for example, the following configuration can be ascertained.

A three-dimensional object printing apparatus according to Aspect 1 includes: a first head unit including a first liquid discharge head that discharges a first liquid; a second head unit including a second liquid discharge head that discharges a second liquid; and a movement mechanism configured to move the first head unit with respect to a three-dimensional workpiece in a first state in which the first head unit is mounted and configured to move the second head unit with respect to the workpiece in a second state in which the second head unit is mounted, in which the first head unit and the second head unit are attachable to and detachable from the movement mechanism. According to Aspect 1, the first liquid discharge head and the second liquid discharge head can be downsized, so that the first head unit and the second head unit can be downsized.

In the three-dimensional object printing apparatus according to Aspect 2, which is a specific example of Aspect 1, the first head unit includes a first ink tank in which the first liquid is stored, and the second head unit includes a second ink tank in which the second liquid is stored. According to Aspect 2, since the first head unit and the second head unit respectively have the first ink tank and the second ink tank, a configuration of the three-dimensional object printing apparatus can be simplified.

The three-dimensional object printing apparatus according to Aspect 3, which is a specific example of Aspect 2, further includes: a liquid supply mechanism configured to supply the first liquid to the first ink tank and to supply the second liquid to the second ink tank, in which the liquid supply mechanism supplies the first liquid to the first ink tank in a state in which the first head unit is not mounted on the movement mechanism, and supplies the second liquid to the second ink tank in a state in which the second head unit is not mounted on the movement mechanism. According to Aspect 3, since a liquid can be supplied to the first ink tank of the first head unit that is not used for printing, a standby time for supplying the first liquid to the first ink tank can be shortened. Similarly, a standby time for supplying the second liquid to the second ink tank can be shortened.

In the three-dimensional object printing apparatus according to Aspect 4, which is a specific example of Aspect 2 or 3, the first head unit includes a first pressure adjustment section configured to adjust a pressure applied to the first liquid supplied from the first ink tank to the first liquid discharge head, and the second head unit includes a second pressure adjustment section configured to adjust a pressure applied to the second liquid supplied from the second ink tank to the second liquid discharge head. According to Aspect 4, even when a posture of the first head unit mounted on the movement mechanism changes, the pressure applied to the first liquid can be adjusted in the first head unit mounted on the movement mechanism, so that the first liquid can be appropriately discharged from the first liquid discharge head to the workpiece. Similarly, the second liquid can be appropriately discharged from the second liquid discharge head to the workpiece.

In the three-dimensional object printing apparatus according to Aspect 5, which is a specific example of any one of Aspects 1 to 4, the movement mechanism includes an irradiation section provided separately from the first head unit and the second head unit and configured to emit energy for curing the first liquid and the second liquid. According to Aspect 5, since the irradiation section is provided in the movement mechanism, it is possible to reduce complication of a configuration around the irradiation section.

In the three-dimensional object printing apparatus according to Aspect 6, which is a specific example of any one of Aspects 1 to 5, the first head unit includes an irradiation section configured to emit energy for curing the first liquid. According to Aspect 6, since the irradiation section can be disposed close to the first liquid discharge head, a time from the discharge of the first liquid to curing can be shortened.

In the three-dimensional object printing apparatus according to Aspect 7, which is a specific example of any one of Aspects 1 to 6, the movement mechanism includes a first heating section provided separately from the first head unit and the second head unit and configured to heat the first liquid, and the first heating section heats the first liquid in the first state in which the first head unit is mounted. According to Aspect 7, since the first heating section is provided in the movement mechanism, it is possible to reduce complication of a configuration around the first heating section.

The three-dimensional object printing apparatus according to Aspect 8, which is a specific example of any one of Aspects 1 to 7, further includes: a second heating section configured to heat the second liquid, in which the second heating section heats the second liquid in a state in which the second head unit is not mounted on the movement mechanism. According to Aspect 8, since the second liquid can be heated in a state in which the second head unit is not mounted on the movement mechanism, a time from the mounting of the second head unit on the movement mechanism to the heating of the second liquid can be shortened.

In the three-dimensional object printing apparatus according to Aspect 9, which is a specific example of any one of Aspects 1 to 8, the first head unit includes a third heating section configured to heat the first liquid, and the second head unit includes a fourth heating section configured to heat the second liquid. According to Aspect 9, since the third heating section can be disposed close to the first liquid discharge head, the first liquid can be appropriately heated. Similarly, the second liquid can be appropriately heated.

In the three-dimensional object printing apparatus according to Aspect 10, which is a specific example of any one of Aspects 1 to 9, the first head unit includes a first drive circuit configured to generate a first drive signal for driving the first liquid discharge head, and a first battery configured to store power supplied to the first drive circuit, and the second head unit includes a second drive circuit configured to generate a second drive signal for driving the second liquid discharge head, and a second battery configured to store power supplied to the second drive circuit. According to Aspect 10, since the first head unit includes the first drive circuit and the first battery, it is not necessary to configure wiring for supplying power to the first drive circuit in a detachable manner. Similarly, it is not necessary to configure wiring for supplying power to the second drive circuit in a detachable manner. As a result, the configuration of the three-dimensional object printing apparatus can be simplified.

The three-dimensional object printing apparatus according to Aspect 11, which is a specific example of Aspect 10, further includes: a power supply mechanism configured to supply power to the first battery and the second battery, in which the power supply mechanism supplies power to the first battery in a state in which the first head unit is not mounted on the movement mechanism, and supplies power to the second battery in a state in which the second head unit is not mounted on the movement mechanism. According to Aspect 11, since power can be supplied to the first battery of the first head unit that is not used for printing, a standby time for supplying power to the first battery can be shortened. Similarly, a standby time for supplying power to the second battery can be shortened. As a result, it is possible to prevent a time from start to end of printing by the three-dimensional object printing apparatus from being increased.

The three-dimensional object printing apparatus according to Aspect 12, which is a specific example of Aspect 10 or 11, further includes: a data transmission section configured to transmit print data to the first drive circuit and the second drive circuit, in which the data transmission section transmits the print data to the second drive circuit in a state in which the second head unit is not mounted on the movement mechanism, and the second drive circuit supplies the second drive signal to the second liquid discharge head based on the print data when the second head unit is mounted on the movement mechanism. According to Aspect 12, since the print data is also transmitted to the second drive circuit of the second head unit that is not mounted on the movement mechanism, throughput from the mounting of the second head unit on the movement mechanism to the supply of the second drive signal to the second liquid discharge head can be improved.

The three-dimensional object printing apparatus according to Aspect 13, which is a specific example of any one of Aspects 1 to 12, further includes: a maintenance mechanism configured to perform maintenance on the first liquid discharge head and the second liquid discharge head, in which the maintenance mechanism performs maintenance on the first liquid discharge head in a state in which the first head unit is not mounted on the movement mechanism, and performs maintenance on the second liquid discharge head in a state in which the second head unit is not mounted on the movement mechanism. According to Aspect 13, since it is possible to perform maintenance on the first liquid discharge head of the first head unit that is not mounted on the movement mechanism, the maintenance of the first liquid discharge head can be efficiently executed. Similarly, the maintenance of the second liquid discharge head can be efficiently executed.

The three-dimensional object printing apparatus according to Aspect 14, which is a specific example of any one of Aspects 1 to 13, includes: a maintenance mechanism configured to perform maintenance on the first liquid discharge head in the first state in which the first head unit is mounted on the movement mechanism and to perform maintenance on the second liquid discharge head in the second state in which the second head unit is mounted on the movement mechanism. According to Aspect 14, since it is possible to perform maintenance on the first liquid discharge head of the first head unit in a state in which the first head unit is mounted on the movement mechanism, a time required for the maintenance can be shortened by a time required for attaching the first head unit to the movement mechanism and detaching the first head unit from the movement mechanism.

The three-dimensional object printing apparatus according to Aspect 15, which is a specific example of any one of Aspects 1 to 14, includes: a first holding mechanism configured to hold the first head unit; and a second holding mechanism configured to hold the second head unit, in which, when the movement mechanism is viewed in a first direction which is a direction parallel to an installation surface on which the movement mechanism is installed and which is a direction facing the movement mechanism from a place at which the workpiece is disposed, the movement mechanism is positioned between the first holding mechanism and the second holding mechanism. According to Aspect 15, since the movement mechanism is positioned between the first holding mechanism and the second holding mechanism, it is possible to prevent a movement amount of the movement mechanism when the first head unit or the second head unit is mounted on the movement mechanism from being increased by the head unit mounted on the movement mechanism.

The three-dimensional object printing apparatus according to Aspect 16, which is a specific example of any one of Aspects 1 to 14, includes: a first holding mechanism configured to hold the first head unit; and a second holding mechanism configured to hold the second head unit, in which, when the movement mechanism is viewed in a first direction which is a direction parallel to an installation surface on which the movement mechanism is installed and which is a direction facing the movement mechanism from a place at which the workpiece is disposed, the first holding mechanism and the second holding mechanism are positioned in the same direction with respect to the movement mechanism, in a direction parallel to the installation surface and perpendicular to the first direction. According to Aspect 16, since the second holding mechanism is disposed close to the first holding mechanism, a movement amount of the movement mechanism when replacing the head unit mounted on the movement mechanism from the first head unit to the second head unit can be reduced. Similarly, a movement amount of the movement mechanism when replacing the head unit mounted on the movement mechanism from the second head unit to the first head unit can be reduced.

The three-dimensional object printing apparatus according to Aspect 17, which is a specific example of any one of Aspects 1 to 16, includes: a first holding mechanism configured to hold the first head unit; and a second holding mechanism configured to hold the second head unit, in which the first liquid is a black liquid, the second liquid is a liquid having a color other than black, and a distance between the first holding mechanism and the workpiece is shorter than a distance between the second holding mechanism and the workpiece. According to Aspect 17, since the first holding mechanism that holds the first head unit including the first liquid discharge head that discharges the first liquid with a high usage frequency is disposed close to the workpiece, throughput of the printing can be improved.

The three-dimensional object printing apparatus according to Aspect 18, which is a specific example of any one of Aspects 1 to 17, includes: a third head unit including a third liquid discharge head that discharges a third liquid different from the first liquid and the second liquid; and a third holding mechanism configured to hold the third head unit, in which the second liquid is a yellow liquid, the third liquid is a magenta liquid, and a distance between the third holding mechanism and the workpiece is shorter than the distance between the second holding mechanism and the workpiece and is longer than the distance between the first holding mechanism and the workpiece. Also in Aspect 18, since the first holding mechanism that holds the first head unit including the first liquid discharge head that discharges the first liquid with a high usage frequency is disposed close to the workpiece, the throughput of the printing can be improved.

The three-dimensional object printing apparatus according to Aspect 19, which is a specific example of any one of Aspects 1 to 18, includes: a first holding mechanism configured to hold the first head unit; and a second holding mechanism configured to hold the second head unit, in which the first holding mechanism includes a first light-blocking portion configured to block light directed to the first liquid discharge head in a state in which the first head unit is held, and the second holding mechanism includes a second light-blocking portion configured to block light directed to the second liquid discharge head in a state in which the second head unit is held. According to Aspect 19, since the first holding mechanism includes the first light-blocking portion that blocks the light directed to the first liquid discharge head, it is possible to reduce clogging of the nozzle due to light reaching the first liquid discharge head even when a standby time of the first head unit until being used for printing is long.

The three-dimensional object printing apparatus according to Aspect 20, which is a specific example of any one of Aspects 1 to 19, includes: an acquisition section configured to acquire error information indicating a mounting error when the first head unit is mounted on the movement mechanism and a mounting error when the second head unit is mounted on the movement mechanism; and a correction section configured to correct a path along which the movement mechanism moves based on the mounting errors indicated by the error information. According to Aspect 20, since the error can be corrected in each of the first head unit and the second head unit, a print quality can be improved.

## Claims

1. A three-dimensional object printing apparatus comprising:
a first head unit including a first liquid discharge head that discharges a first liquid;
a second head unit including a second liquid discharge head that discharges a second liquid; and
a movement mechanism configured to move the first head unit with respect to a three-dimensional workpiece in a first state in which the first head unit is mounted and configured to move the second head unit with respect to the workpiece in a second state in which the second head unit is mounted, wherein
the first head unit and the second head unit are attachable to and detachable from the movement mechanism.

2. The three-dimensional object printing apparatus according to claim 1, wherein
the first head unit includes a first ink tank in which the first liquid is stored, and
the second head unit includes a second ink tank in which the second liquid is stored.

3. The three-dimensional object printing apparatus according to claim 2, further comprising:
a liquid supply mechanism configured to supply the first liquid to the first ink tank and to supply the second liquid to the second ink tank, wherein
the liquid supply mechanism supplies the first liquid to the first ink tank in a state in which the first head unit is not mounted on the movement mechanism, and supplies the second liquid to the second ink tank in a state in which the second head unit is not mounted on the movement mechanism.

4. The three-dimensional object printing apparatus according to claim 2 or 3, wherein
the first head unit includes a first pressure adjustment section configured to adjust a pressure applied to the first liquid to be supplied from the first ink tank to the first liquid discharge head, and
the second head unit includes a second pressure adjustment section configured to adjust a pressure applied to the second liquid to be supplied from the second ink tank to the second liquid discharge head.

5. The three-dimensional object printing apparatus according to any one of claims 1 to 4, wherein
the movement mechanism includes an irradiation section configured to emit energy for curing the first liquid.

6. The three-dimensional object printing apparatus according to any one of claims 1 to 5, wherein
the movement mechanism includes a first heating section configured to heat the first liquid, and
the first heating section heats the first liquid in the first state in which the first head unit is mounted.

7. The three-dimensional object printing apparatus according to any one of claims 1 to 6, wherein
the first head unit includes a third heating section configured to heat the first liquid, and
the second head unit includes a fourth heating section configured to heat the second liquid.

8. The three-dimensional object printing apparatus according to any one of claims 1 to 7, wherein
the first head unit includes
a first drive circuit configured to generate a first drive signal for driving the first liquid discharge head, and
a first battery configured to store power to be supplied to the first drive circuit, and
the second head unit includes
a second drive circuit configured to generate a second drive signal for driving the second liquid discharge head, and
a second battery configured to store power to be supplied to the second drive circuit.

9. The three-dimensional object printing apparatus according to any one of claims 1 to 8, further comprising:
a maintenance mechanism configured to perform maintenance on the first liquid discharge head and the second liquid discharge head, wherein
the maintenance mechanism performs maintenance on the first liquid discharge head in a state in which the first head unit is not mounted on the movement mechanism, and performs maintenance on the second liquid discharge head in a state in which the second head unit is not mounted on the movement mechanism.

10. The three-dimensional object printing apparatus according to any one of claims 1 to 8, further comprising:
a maintenance mechanism configured to perform maintenance on the first liquid discharge head in the first state in which the first head unit is mounted on the movement mechanism and to perform maintenance on the second liquid discharge head in the second state in which the second head unit is mounted on the movement mechanism.

11. The three-dimensional object printing apparatus according to any one of claims 1 to 10, further comprising:
a first holding mechanism configured to hold the first head unit; and
a second holding mechanism configured to hold the second head unit, wherein,
when the movement mechanism is viewed in a first direction which is a direction parallel to an installation surface on which the movement mechanism is installed and which is a direction facing the movement mechanism from a place at which the workpiece is disposed, the movement mechanism is positioned between the first holding mechanism and the second holding mechanism.

12. The three-dimensional object printing apparatus according to any one of claims 1 to 10, further comprising:
a first holding mechanism configured to hold the first head unit; and
a second holding mechanism configured to hold the second head unit, wherein,
when the movement mechanism is viewed in a first direction which is a direction parallel to an installation surface on which the movement mechanism is installed and which is a direction facing the movement mechanism from a place at which the workpiece is disposed, the first holding mechanism and the second holding mechanism are positioned in the same direction with respect to the movement mechanism, in a direction parallel to the installation surface and perpendicular to the first direction.

13. The three-dimensional object printing apparatus according to any one of claims 1 to 10, further comprising:
a first holding mechanism configured to hold the first head unit; and
a second holding mechanism configured to hold the second head unit, wherein
the first liquid is a black liquid,
the second liquid is a liquid having a color other than black, and
a distance between the first holding mechanism and the workpiece is shorter than a distance between the second holding mechanism and the workpiece.

14. The three-dimensional object printing apparatus according to claim 13, further comprising:
a third head unit including a third liquid discharge head that discharges a third liquid; and
a third holding mechanism configured to hold the third head unit, wherein
the second liquid is a yellow liquid,
the third liquid is a magenta liquid, and
a distance between the third holding mechanism and the workpiece is shorter than the distance between the second holding mechanism and the workpiece and is longer than the distance between the first holding mechanism and the workpiece.

15. The three-dimensional object printing apparatus according to any one of claims 1 to 14, further comprising:
a first holding mechanism configured to hold the first head unit; and
a second holding mechanism configured to hold the second head unit, wherein
the first holding mechanism includes a first light-blocking portion configured to block light directed to the first liquid discharge head in a state in which the first head unit is held, and
the second holding mechanism includes a second light-blocking portion configured to block light directed to the second liquid discharge head in a state in which the second head unit is held.
